# EUROPÄISCHE PATENTSCHRIFT

(11) **EP 2 341 999 B1**
(45) Veröffentlichungstag und Bekanntmachung des Hinweises auf die Patenterteilung: **19.12.2012**
(21) Anmeldenummer: 09751767.6
(22) Anmeldetag: 02.10.2009
(51) Int. Cl.: B01D 46/02, B01D 46/06

(54) **FILTERELEMENT ZUR REINIGUNG EINES MIT PARTIKELN BELADENEN LUFTSTROMS SOWIE DAMIT AUSGESTATTETE FILTERVORRICHTUNG**
FILTER ELEMENT FOR CLEANING AN AIR STREAM THAT IS CHARGED WITH PARTICLES AND FILTER DEVICE THAT IS EQUIPPED WITH SAID ELEMENT
ÉLÉMENT FILTRANT POUR ÉPURER UN FLUX D'AIR CHARGÉ DE PARTICULES ET DISPOSITIF DE FILTRATION ÉQUIPÉ DE CET ÉLÉMENT

(30) Priorität: 08.10.2008 AT 15722008
(43) Veröffentlichungstag der Anmeldung: 13.07.2011
(73) Patentinhaber: Kappa Filter Systems GmbH, 4407 Steyr-Gleink (AT)
(72) Erfinder: KRÜGER, Klaus, A-4400 Steyr (AT)
(74) Vertreter: Burger, Hannes
(86) Internationale Anmeldenummer: PCT/AT2009/000378
(87) Internationale Veröffentlichungsnummer: WO 2010/040158

(56) Entgegenhaltungen:
- DE-A1- 3 733 255
- US-A- 4 247 313
- US-A- 6 073 905

## Beschreibung

Die Erfindung betrifft ein Filterelement zu Reinigung eines mit Partikeln beladenen Luftstroms, wie es in Anspruch 1 angegeben ist, sowie eine damit ausgestattete Filtervorrichtung, wie sie im Anspruch 20 beschrieben ist.

Ein gattungsgemäßes Filterelement, welches häufig auch als Schlauchfilter bezeichnet wird, ist aus der Praxis bekannt. Ein solches Filterelement umfasst als Filtermedium einen netz- bzw. gewebeartigen Filterstrumpf, der sackartig ausgebildet ist und so einen innerhalb des Filterstrumpfes angeordneten Stützkorb relativ eng anliegend umkleidet. Dabei ist der Innendurchmesser des Filterstrumpfes in etwa gleich groß oder nur geringfügig größer als der Außendurchmesser des Stützkorbes, sodass der formstabile Stützkorb gerade noch in den formflexiblen Filterstrumpf eingeschoben werden kann. Der entsprechende Stützkorb besteht dabei aus einer Mehrzahl von stabartigen Profilen, welche netz- bzw. korbartig miteinander verbunden bzw. verschweißt sind. Insbesondere umfasst ein solcher Stützkorb eine Mehrzahl von in Kreisform aneinander gereihten, zueinander beabstandeten Profilstäben, welche über zumindest einen kreisrunden Haltering in Position gehalten werden. Dieser somit hohlzylindrische Stützkorb wird sodann vom sackartigen Filterstrumpf relativ stramm umhüllt, wobei die Querschnittsdimensionen des im Querschnitt kreisrunden bzw. polygonen Stützkorbes und die Querschnittsdimensionen des Filterstrumpfes annähernd gleich sind. Dieser aus dem Stand der Technik bekannte Schlauchfilter umfassend einen sackartigen Filterstrumpf und einen darin relativ knapp eingesetzten, korbartigen Stützkörper weist nur eine bedingt zufriedenstellende Filterperformance auf.

In der WO 02/02206 A2 ist eine gattungsgemäße Filtervorrichtung mit einer Mehrzahl von darin aufgenommenen Filterelementen beschrieben. Die Filterelemente sind dabei durch so genannte Filterpatronen gebildet, welche einen elliptischen Querschnitt aufweisen. Diese Filterpatronen bestehen aus einem gefalteten Filterpapier, welches zwischen einem inneren und einem äußeren Stützkorb in Position gehalten ist. Der innere und äußere Stützkorb für das gefaltete Filterpapier sind dabei aus einem Streckmetall-Element gebildet. Die axialen Enden dieser Filterpatronen weisen Abschlusskappen auf, in welchen die axialen Enden des Filterpapiers und der Stützkörbe gehaltert, insbesondere eingegossen sind. Diese Filterpatronen werden ausgehend von der Schmutzluftkammer in die Filtervorrichtung eingesetzt und mit einem Dichtring gegen die der Schmutzluftkammer zugewandte Flachseite einer Trennwand zwischen der Schmutzluftkammer und der Reinluftkammer gedrückt. Nachteilig ist dabei, dass derartige Filterpatronen kostenintensiv sind und beim Erreichen der maximalen Einsatzdauer komplett zu ersetzen sind. Außerdem ist das Handling derartiger Filterpatronen nur bedingt zufriedenstellend, da Service- und Wartungsarbeiten an der Filtervorrichtung bzw. an deren Filterelementen ausgehend von der Schmutzluftkammer der Filtervorrichtung zu erfolgen haben.

Die US 4,247,313 A beschreibt eine Filtervorrichtung zur Absonderung der in einem zugeführten Luftstrom enthaltenen Partikel. Die Filtervorrichtung weist dabei ein Filtergehäuse auf, welches mehrere Filterelemente aufnimmt, die aus käfigartigen Stützkörben mit übergestülpten, sackartigen Filterstrümpfen gebildet sind, über welche die im zugeführten Luftstrom enthaltenen Partikel aus dem Luftstrom abgeschieden werden. Die Filterstrümpfe sind dabei jeweils über einen käfigartigen Stützkörper gestülpt, um eine völlige Kontraktion der Filterstrümpfe beim Aufbau von Unterdruck im Inneren der sackförmigen Filterstrümpfe zu vermeiden. Der zugeführte, durch den Filterstrumpf gesaugte Luftstrom bewirkt dabei eine im Querschnitt wellen- oder zahnradförmige Anschmiegung des Filterstrumpfes an die zueinander distanzierten Begrenzungsstäbe des käfigartigen Stützkorbes. Zumindest ein gewisser Anteil der im zugeführten Luftstrom enthaltenen Partikel bleibt dabei an der äußeren Oberfläche des Filterstrumpfes hängen. Der Querschnitt der Filterstrümpfe ist dabei etwas größer bemessen als der Querschnitt der Stützkörbe, sodass die Filterstrümpfe die Stützkörbe locker umkleiden. Zur Reinigung von Filterstrümpfen, welche an der äußeren Oberfläche allmählich mit abgesonderten Partikeln behaftet sind, ist vorgesehen, in das Innere des Stützkorbes Druckluftimpulse einzuleiten, welche eine Expansion der Filterstrümpfe und ein wenigstens teilweises Abfallen der an der äußeren Oberfläche anhaftenden Partikel ermöglichen. Gemäß dieser vorbekannten Ausbildung sind nur Filterstrümpfe verwendbar, welche einen marginal größeren Querschnitt aufweisen, als der vom Filterstrumpf zu umschließende Stützkörper, um eine möglichst gleichmäßige bzw. kontrollierte Umkleidung des Stützkorbes zu erzielen, sobald im Inneren des Stützkorbes Unterdruck aufgebaut wird. Insbesondere kann der Querschnitt des Filterstrumpfes nur geringfügig größer gewählt werden als der Querschnitt des Stützkorbes, um abschnittsweise Straffungen und abschnittsweise Konzentrationen des Filterstrumpfes hintan zu halten und beispielsweise eine Überlagerung bzw. eine Doppellagigkeit des Materials des Filterstrumpfes in Teilabschnitten seiner Mantelfläche hintan zu halten. Die Filterleistung, Wartbarkeit und Zuverlässigkeit dieser vorbekannten Filtervorrichtung ist dadurch nur bedingt zufriedenstellend.

Die US 6,073,905 A beschreibt ebenso eine gattungsgemäße Filtervorrichtung, welche sackartige Filterstrümpfe aufweist, die über käfigartige Stützkörbe gestülpt sind. Im Filterbetrieb wird dabei die zu reinigende Luft ausgehend von der äußeren Oberfläche der Filterstrümpfe in das Innere der Stützkörper gesaugt, wobei zumindest ein Teil der abzuscheidenden Partikel an der äußeren Oberfläche der sackartigen Filterstrümpfe hängen bleibt und die entsprechend gereinigte Luft aus dem Inneren der Stützkörbe bzw. sackartigen Filterstrümpfe abgeführt wird. Zum Zweck einer Reinigung der Filterstrümpfe ist vorgesehen, in das Innere der sackartigen Filterstrümpfe bzw. in den Innenraum der Stützkörbe Pressluft einzuleiten, wodurch die sackartigen Filterstrümpfe in ihrem Mantelabschnitt temporär eine nach außen gebauchte Form einnehmen, nachdem das flexible Filtermaterial dieser Filterstrümpfe elastisch gedehnt wird. Durch die impulsartige Expansion des elastischen Filtermaterials und aufgrund der dadurch hervorgerufenen Ausdehnung des Filtermaterials werden an der äußeren Oberfläche anhaftende Staubpartikel abgeworfen und wird damit ein Reinigungseffekt für das Filtermaterial der sackartigen Filterstrümpfe erzielt. Derartige Expansionen und elastische Dehnungen im Filtermaterial beeinträchtigen mittelfristig die Filterwirkung des Filtermaterials. Insbesondere tritt nach gewisser Zeitdauer eine Verschlechterung der Filterwirkung der sackartigen Filterstrümpfe ein, nachdem jede elastische Dehnung des Filtermaterials dessen Maschenweite bzw. Gefüge verändert. Im Ausgangs- bzw. Ruhezustand sind die sackartigen Filterstrümpfe relativ eng über den Stützkorb gestülpt, sodass willkürliche bzw. ungünstige Verteilungen des Filterstrumpfes in Bezug auf die einzelnen Stützabschnitte der Stützkörbe hintan gehalten sind. Die Filterperformance ist dadurch aber nur bedingt zufriedenstellend, da die verfügbare Filterfläche der Filterstrümpfe pro Stützkorb nur vergleichsweise gering ist.

Die DE 37 33 255 A1 beschreibt ebenso eine Filtervorrichtung, welche eine Mehrzahl von sogenannten Schlauchfiltern umfasst. Dabei sind Stützkörper vorgesehen, die einen ovalen, ellipsenförmigen, spitzovalen oder rechteckigen Querschnitt haben, um in einem Gehäuse vorgegebener Größe ohne Beeinträchtigung der Staubabscheidung möglichst viele Schlauchfilterelemente anordnen zu können. Die Filterstrümpfe liegen dabei relativ eng um die entsprechenden Stützkörbe und werden die Filterstrümpfe beim Aufbau von Unterdruck im Inneren der Filtervorrichtung gegen die Stützflächen der Stützkörbe gedrängt, sodass eine im Querschnitt wellen- oder zahnradförmige Umrisskontur entsteht. Eine Querschnittsveränderung der Filterstrümpfe in Bezug auf deren Längserstreckung ist nicht vorgesehen.

Der vorliegenden Erfindung liegt die Aufgabe zu Grunde, ein relativ kostengünstiges und einfach zu wartendes Filterelement zu schaffen, welches trotzdem eine möglichst gute Filterperformance aufweist. Eine weitere Aufgabe der Erfindung liegt darin, eine verbesserte Filtervorrichtung anzugeben.

Die erstgenannte Aufgabe der Erfindung wird durch die Maßnahmen gemäß Anspruch 1 gelöst.

Ein sich durch die Merkmale des Anspruches 1 ergebender Vorteil liegt darin, dass ein derartiges Filterelement eine optimierte Filterperformance aufweist und dennoch relativ kostengünstig aufgebaut werden kann. Zudem ist der Service- bzw. Wartungsaufwand gering bzw. sind die damit einhergehenden Service- bzw. Wartungskosten relativ niedrig, da ein eventuell notwendiger Tausch des Filterstrumpfes problemlos vorgenommen und rasch abgeschlossen werden kann. Als Verschleiß- bzw. Austauschteil ist dabei lediglich der relativ kostengünstige, sackartige Filterstrumpf zu verstehen. Ein besonderer Vorteil des erfindungsgemäßen Filterelementes liegt darin, dass es im Vergleich zu standardmäßigen Schlauchfiltern eine deutlich bessere Filterperformance aufweist. Insbesondere weist das erfindungsgemäße Filterelement bei unveränderten, maximalen Außenabmessungen eine wesentlich größere Oberfläche und damit eine deutlich größere, effektive Filterfläche auf. Jedenfalls ist die Filterleistung des erfindungsgemäßen Filterelements im Vergleich zu einem herkömmlichen Filterelement mit annähernd gleichen bzw. identischen Außenabmessungen merklich besser. Aufgrund des relativ großflächigen bzw. großvolumigen Filterstrumpfes und des damit zusammenwirkenden, im Vergleich zum Filterstrumpf relativ klein bzw. schmal dimensionierten Stützkörpers, können auch die Wartungs- bzw. Reinigungsintervalle in vorteilhafter Art und Weise verlängert werden, ohne dadurch eine Verschlechterung der Filterperformance zu verursachen. Jedenfalls werden bei im Wesentlichen gleich bleibenden Außenabmessungen des Filterelementes bzw. dessen Stützkörpers größere, effektiv wirksame Filterflächen zur Verfügung gestellt. D.h., dass das erfindungsgemäße Filterelement eine vergrößerte, wirksame Filterfläche aufweist, obwohl dessen Außendimensionen gleich geblieben sind oder nicht wesentlich größer sind. Dies wird vor allem durch die möglichst strukturierte Wellenbildung bzw. durch die intensive, beabsichtigte Faltenbildung im formflexiblen, luftdurchlässigen Filterstrumpf im Zusammenwirken mit dessen Stützkörper erzielt.

Ein besonderer Vorteil der erfindungsgemäßen Ausgestaltung liegt auch darin, dass bestehende Filtervorrichtungen problemlos mit den erfindungsgemäßen Filterelementen mit vergrößerter Filterfläche ausgestattet werden können, nachdem die äußeren Abmessungen des erfindungsgemäß verbesserten Filterelementes nicht oder nur unwesentlich von den standardmäßigen Filterelementen abweichen. Insbesondere kann problemlos eine um ca. 30 % größere Filteroberfläche erzielt und ein derartiges Filterelement einfach in eine bestehende Filtervorrichtung eingesetzt werden. Ein wesentlicher Vorteil der deutlich vergrößerten Filterfläche des beanspruchten Filterelementes liegt auch darin, dass eine vergleichsweise geringere Anströmgeschwindigkeit erreicht werden kann bzw. ein geringerer Strömungsdruck auf den Filterstrumpf einwirkt. Dies wirkt sich positiv auf den Abscheidungsgrad bzw. auf die Abscheidungsleistung des Filterelementes aus. Die größere Filteroberfläche des Filterelementes ermöglicht aber auch eine längere Einsatzdauer des Filterstrumpfes, ohne dass eine zwischenzeitliche Wartung oder eine zwischenzeitliche Entfernung von gegebenenfalls anhaftenden Partikeln erforderlich ist. Ein weiterer Vorteil der erfindungsgemäßen Ausbildung liegt darin, dass der mechanische Verschleiß, welcher unter anderem durch den Strömungsdruck und durch die am Filterstrumpf anprallenden Partikel verursacht wird, minimiert ist und ein erfindungsgemäßes Filterelement somit eine erhöhte Einsatzdauer erzielen kann. Die entsprechend verbesserte Filterperformance des Filterelementes wirkt sich weiters positiv auf die Energieeffizienz bzw. den Wirkungsgrad der Filtervorrichtung aus, da ein relativ niedriger Strömungsdruck bzw. Unterdruck ausreichend ist, um ein hohen Durchsatz zu erreichen bzw. ein großes Volumen an Rohgas durch ein entsprechendes Filterelement zu leiten und entsprechend zu filtern. Ein weiterer Vorteil des erfindungsgemäßen Filterelementes liegt darin, dass dieses problemlos eine axiale Länge von bis zu 10 Meter aufweisen kann, ohne dass dadurch mechanische Instabilitäten auftreten.

Vorteilhaft ist auch, dass ein Filterstrumpf mit in Seitenansicht in etwa flaschenartiger Körperform geschaffen ist. Ein solcher Filterstrumpf kann exakt bzw. mit hoher Funktionszuverlässigkeit in eine bestehende Filtervorrichtung eingebaut werden, wobei ein solcher Filterstrumpf in seinem Mantelabschnitt eine reproduzierbare bzw. plangemäße Faltenbildung begünstigt. Der konische Kragenabschnitt des Filterstrumpfes ermöglicht auch eine optimierte bzw. gut abdichtende Befestigung des Filterstrumpfes innerhalb der Filtervorrichtung. Weiters kann ein entsprechender Filterstrumpf relativ mühelos durch den entsprechenden Aufnahme-Durchbruch in einer Trennwand bzw. Trennplatte der Filtervorrichtung eingeschoben und rings um den Durchbruch zuverlässig befestigt werden. Wesentlich ist weiters, dass ein solcher Filterstrumpf ein nahezu makelloses bzw. möglichst gleichförmiges Falten- bzw. Wellenbild innerhalb des Mantelabschnitts des Filterstrumpfes ermöglicht, obwohl der Filterstrumpf den zentralen Stützkörper im inaktiven bzw. unterdrucklosen Zustand der Filtervorrichtung relativ locker bzw. mit dazwischen liegendem Spielraum umhüllt.

Von Vorteil ist auch eine Ausgestaltung nach Anspruch 2, da dadurch ein Großteil der axialen Erstreckung des Mantelabschnittes des Filterstrumpfes eine Mehrzahl von definierten sinus- oder mäanderförmigen Falten bzw. Oberflächenwellen ausbilden kann, sodass der Filterstrumpf eine möglichst große Filteroberfläche bzw. ein relativ großflächiges Filtermedium darstellen kann.

Durch die Ausgestaltung nach Anspruch 3 wird eine geordnete Raffung bzw. eine möglichst gleichmäßige Wellen- oder Faltenbildung zumindest im Mantelabschnitt des Filterstrumpfes begünstigt, wenn während des Betriebs der Filtervorrichtung im Inneren des Filterstrumpfes bzw. des Filterelementes entsprechender Unterdruck aufgebaut wird.

Durch die Ausgestaltung nach Anspruch 4 kann ein Stützkörper, welcher eine Zusammenstauchung des Filterstrumpfes beim Einwirken von Unter- bzw. Überdruck unterbindet, mühelos von oben in einen aufnahmebereit aufgehängten, sackartigen Filterstrumpf eingesetzt werden. Außerdem kann eine praktikable und sichere Festlegung des Stützkörpers und des Filterstrumpfes rings um den entsprechenden Durchbruch in der Trennplatte einer Filtervorrichtung erfolgen.

Von besonderem Vorteil ist auch eine Weiterbildung nach Anspruch 5, da dadurch eine plangemäße Relativpositionierung bzw. eine möglichst gleichmäßige Verteilung des großflächigen bzw. großvolumigen, relativ formflexiblen Filterstrumpfes gegenüber dem formstabilen Stützkörper erzielt wird. Darüber hinaus wird mit geringem Handhabungsaufwand bzw. in relativ kurzer Zeit eine exakte Verkleidung bzw. Umhüllung des Stützkörpers mittels einem solchen Filterstrumpf erzielt.

Von Vorteil ist dabei eine Weiterbildung nach Anspruch 6, da dadurch der Stützkörper einfach und rasch in den Filterstrumpf eingesetzt bzw. eingeschoben oder der Filterstrumpf auf den Stützkörper aufgeschoben werden kann und alleinig durch das Ein- bzw. Aufschieben eine dauerhaft gleichmäßige Verteilung bzw. Relativpositionierung zwischen der Stützfläche des Stützkörpers und den Oberflächenabschnitten des Filterstrumpfes erreicht wird.

Von Vorteil ist auch eine Ausgestaltung nach Anspruch 7, da dadurch eine einseitige Aggregation des sackartigen, in seiner Form relativ instabilen Filterstrumpfes gegenüber dem vergleichsweise formbeständigen Stützkörper zuverlässig unterbunden werden kann.

Durch die Weiterbildung nach Anspruch 8 werden mehrlagige Umfaltungen bzw. einseitige Anhäufungen und diametral gegenüberliegende Straffungen des Filterstrumpfes zuverlässig vermieden.

Bei der Ausgestaltung nach Anspruch 9 ist von Vorteil, dass derartige Verbindungselemente werkzeuglos bedient werden können und somit eine besonders einfache Handhabung gewährleisten. Ferner können eventuell notwendige Servicetätigkeiten an den Filterelementen spontan und rasch erledigt werden.

Ein besonders leichtgewichtiger, strömungstechnisch optimaler Stützkörper wird durch die Maßnahmen gemäß Anspruch 10 erzielt. Ein weiterer Vorteil dieser Ausgestaltung liegt darin, dass derartige Stützkörper relativ kostengünstig aufgebaut werden können und dennoch ausreichende Stabilität bieten. Darüber hinaus können die strömungstechnischen Eigenschaften eines derartigen Stützkörpers problemlos an die jeweiligen Erfordernisse bzw. Einsatzbedingungen angepasst werden.

Bei der Ausgestaltung gemäß Anspruch 11 ist ein ideales Verhältnis zwischen ausreichender Stützwirkung, geringem Strömungswiderstand und hoher Robustheit erzielt.

Durch die Maßnahmen gemäß Anspruch 12 wird ein Stützkörper erzielt, welcher einen besonders geringen Strömungswiderstand aufweist und dennoch eine ausreichend gute Stützwirkung für den Filterstrumpf bietet.

Eine besonders vorteilhafte Ausgestaltung des Stützkörpers ist in Anspruch 13 angegeben. Dadurch wird ein Stützkörper erzielt, der eine hohe mechanische Stabilität besitzt, die Schaffung einer relativ großen Mantel- bzw. Stützfläche für den formflexiblen Filterstrumpf ermöglicht und zugleich eine optimale Schonung für den Filterstrumpf bietet. Insbesondere sind dadurch scharfkantige Übergänge und punkt- bzw. linienartige Abstütz- bzw. Kontaktzonen zwischen dem Stützkörper und dem Filterstrumpf vermieden. Ein Reißen bzw. Aufscheuern des Filterstrumpfes am Stützkörper wird dadurch wirkungsvoll hintan gehalten.

Auch durch die Ausgestaltung gemäß Anspruch 14 wird ein Stützkörper mit kompakten Außenabmessungen und dennoch relativ großflächiger Mantel- bzw. Stützfläche für den Filterstrumpf geschaffen. Eine solche Oberflächenvergrößerung des Stützkörpers kommt dabei der angestrebten Angleichung bzw. Formanpassung des relativ großflächigen, formflexiblen Filterstrumpfes relativ zum formstabilen Stützkörper zugute. Insbesondere kann sich der formflexible Filterstrumpf relativ exakt und gleichförmig an einen entsprechend konturierten Stützkörper anpassen.

Durch die Maßnahmen gemäß Anspruch 15 kann in einfacher und effektiver Art und Weise eine Oberflächenvergrößerung des Stützkörpers erzielt werden, ohne dass die größten Außenabmessungen bzw. die Maximalerstreckungen des Stützkörpers erhöht werden müssen. Somit kann die Filteroberfläche bei im Wesentlichen gleich bleibendem Raumbedarf für das Filterelement vergrößert und die Filterperformance verbessert werden.

Ein sich durch die Merkmale des Anspruches 16 ergebender Vorteil liegt darin, dass der Filterstrumpf möglichst geschont wird und eine verlängerte Einsatz- bzw. Nutzungsdauer erzielt werden kann.

Durch die Maßnahmen gemäß Anspruch 17 wird eine gute Strukturierung des Filterstrumpfes bzw. eine gleichmäßige Verteilung des Filterstrumpfes in Relation zur Mantel- bzw. Stützfläche des Stützkörpers erzielt. Ein weiterer Vorteil liegt darin, dass die Robustheit des Filterstrumpfes erhöht wird bzw. auch Filterstrümpfe mit relativ niedriger Reißfestigkeit problemlos eingesetzt werden können. Ein bedeutender Vorteil besteht auch darin, dass dadurch eine Abreinigung des Filterstrumpfes, insbesondere eine Reinigung mittels Press- bzw. Druckluft besonders effektiv ist. Insbesondere kann durch die Einwirkung von Pressluft auf die Innenseite des Stützkörpers und somit auch auf die Innenseite des Filterstrumpfes eine impulsartige Beschleunigung bzw. Expansion des Filterstrumpfes erzielt werden. Das heißt, dass jene Abschnitte des Filterstrumpfes, welche nach der Aktivierung des Filterbetriebes innerhalb der Vertiefungen des Stützkörpers liegen, durch den Druckluftimpuls radial nach außen beschleunigt bzw. ruckartig aus den Vertiefungen bewegt werden, wodurch an der Außenfläche des Filterstrumpfes gegebenenfalls anhaftende Partikel besonders effektiv abgestoßen bzw. abgeschüttelt werden können. Insbesondere kann der Filterstrumpf durch Pressluft quasi von innen aufgeblasen bzw. in seine ursprüngliche, relativ großvolumige und oberflächlich relativ glatte Form rückgeführt werden, wodurch ein Großteil der an der Außenseite anhaftenden Partikel bzw. Stäube besonders zuverlässig abgestoßen werden kann. Die erfindungsgemäße Ausbildung ermöglicht also auch eine besonders wirkungsvolle und rasch durchführbare Abreinigung des Filterelementes mittels einer im Inneren des Filterelementes aufgebauten Druckluftströmung bzw. mittels eines in den Filterinnenraum eingeleiteten, kurzzeitigen Druckluftimpulses.

Die Ausgestaltung nach Anspruch 18 ermöglicht eine Oberflächenvergrößerung des Filterelementes bei gleichzeitiger Schonung des Filterstrumpfes, welcher aufgrund des Unter- bzw. Überdruckes der Luftströmung vergleichsweise enger bzw. dichter um den Stützkörper gelegt bzw. gedrückt wird.

Ferner ist eine Ausbildung nach Anspruch 19 von Vorteil, da dadurch Stützkörper mit ausreichender Stützwirkung für den Filterstrumpf und dennoch möglichst niedriger Masse geschaffen werden können. Ein weiterer Vorteil liegt darin, dass solche Stützkörper einen besonders niedrigen Strömungswiderstand erzielen können, eine möglichst plangemäße bzw. reproduzierbare Oberflächenstrukturierung im relativ großflächigen bzw. großvolumigen Filterstrumpf gewährleisten und relativ kostengünstig aufgebaut werden können. Darüber hinaus ist die mit einem solchen Stützkörper erzielbare Oberflächenvergrößerung des Filterelementes besonders ausgeprägt, da nicht nur eine Oberflächenvergrößerung in Bezug auf den Querschnittsumfang, sondern auch in Bezug auf die Längserstreckung bzw. die axiale Länge des Filterelementes erzielt werden kann, wenn die einzelnen, in ihrer Umrisskontur stern- oder zahnradförmigen Ringelemente in entsprechendem Abstand zueinander distanziert gehaltert sind. Es sind somit entweder relativ kompakte Außenabmessungen erzielbar bzw. kann trotz Ein- bzw. Beibehaltung der maximalen Dimensionen des Filterelementes dessen Filterleistung merklich gesteigert werden.

Die Aufgabe der Erfindung wird aber auch durch eine Filtervorrichtung gemäß Anspruch 20 gelöst.

Vorteilhaft ist dabei, dass diese Filtervorrichtung besonders wirtschaftlich betrieben werden kann, nachdem die Filterelemente kostengünstig sind und nach einsatzbedingter Verschmutzung relativ problemlos ersetzt oder gründlich gereinigt werden können. Eine Reinigung soll dabei spätestens dann durchgeführt werden, wenn an der äußeren Filterfläche der Filterelemente eine zu hohe Anzahl von Partikeln haftet und der Strömungswiderstand der Filtervorrichtung auf ein unerwünscht hohes Maß angestiegen ist. Ein weiterer Vorteil dieser Filtervorrichtung liegt darin, dass eine Wartung bzw. ein Tausch der Filterelemente ausgehend von der Reingasseite, insbesondere ausgehend von der Reinluftkammer vorgenommen werden kann. Jedenfalls können die jeweils zu wartenden Filterstrümpfe bzw. die zu ersetzenden Filterelemente ausgehend von der Reinluftkammer aus der Schmutzluftkammer entnommen und ausgehend von der Reinluftkammer wieder in die Schmutzluftkammer eingesetzt werden. Ein Öffnen der Schmutzluftkammer ist also nicht zwingend erforderlich, um die Filterstrümpfe bzw. die beanspruchten Filterelemente zu ersetzen. Ein wesentlicher Vorteil dieser Filtervorrichtung liegt auch darin, dass sie in Verbindung mit dem gekennzeichneten Filterelement eine deutlich bessere Filterperformance erzielt, ohne dass an der Filtervorrichtung strukturelle Umbauten erforderlich sind.

Durch die Maßnahmen gemäß Anspruch 21 wird die Filterperformance der Filtervorrichtung verbessert, da Filterstümpfe mit vergleichsweise größerer Filteroberfläche eingesetzt werden können. Zudem wird eine hohe Wirtschaftlichkeit der Filtervorrichtung erreicht, da ohne Umbauten bzw. trotz gleich bleibendem Durchmesser des Durchbruches zur Halterung der Filterelemente deutlich leistungsfähigere Filterelemente eingesetzt werden, welche aufgrund der Formflexibilität des Filterstrumpfes problemlos montiert bzw. in Betrieb genommen werden können.

Auch durch die Maßnahmen gemäß Anspruch 22 wird ein struktureller Umbau einer bestehenden Filtervorrichtung erübrigt, nachdem die Filtervorrichtung einen Stützkörper mit im Wesentlichen gleich bleibenden, maximalen Außenabmessungen aufnehmen kann, wobei dieser Stützkörper im Zusammenwirken mit dem relativ großflächigen bzw. großvolumigen Filterstrumpf eine vergleichsweise größere Filteroberfläche bildet, welche die Filterleistung der Filtervorrichtung insgesamt verbessert.

Zum besseren Verständnis der Erfindung wird diese anhand der nachfolgenden Figuren näher erläutert.

Es zeigen jeweils in stark vereinfachter, schematischer Darstellung:
- Fig. 1: eine beispielhafte Ausführungsform einer Filtervorrichtung mit einer Mehrzahl von darin eingesetzten Filterelementen in teilweiser Schnittdarstellung;
- Fig. 2: ein Filterelement zur Verwendung bei einer Filtervorrichtung gemäß Fig. 1 umfassend einen schlauch- oder sackartigen Filterstrumpf mit einem darin eingesetzten, luftdurchlässigen Stützkörper;
- Fig. 3: das Filterelement gemäß Fig. 2 in Seitenansicht gemäß Pfeil III in Fig. 2;
- Fig. 4: das Filterelement gemäß Fig. 2 geschnitten gemäß den Linien IV - IV in Fig. 2;
- Fig. 5: ein weiteres Ausführungsbeispiel eines luftdurchlässigen Stützkörpers für ein Filterelement nach Fig. 2 in Ansicht auf dessen Mantelfläche;
- Fig. 6: den Stützkörper gemäß Fig. 5 in Ansicht auf dessen Stirnfläche gemäß Pfeil VI in Fig. 5;
- Fig. 7: einen luftdurchlässigen bzw. mit zahlreichen Durchbrüchen versehenen Stützkörper zur Verwendung in Verbindung mit einem Filterelement gemäß Fig. 2 in perspektivischer Darstellung;
- Fig. 8: das Filterelement gemäß Fig. 2 während eines aktiven Filterbetriebs mit radial von außen einströmender, zu reinigender Luft in beispielhafter, schematischer Querschnittsdarstellung;
- Fig. 9: einen Ausschnitt einer weiteren Ausführungsform eines Filterelementes innerhalb einer Filtervorrichtung in schematischer Schnittdarstellung;
- Fig. 10: eine weitere Ausführungsvariante eines Stützkörpers für ein Filterelement in perspektivischer Darstellung.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Sämtliche Angaben zu Wertebereichen in gegenständlicher Beschreibung sind so zu verstehen, dass diese beliebige und alle Teilbereiche daraus mit umfassen, z.B. ist die Angabe 1 bis 10 so zu verstehen, dass sämtliche Teilbereiche, ausgehend von der unteren Grenze 1 und der oberen Grenze 10 mitumfasst sind, d.h. sämtliche Teilbereich beginnen mit einer unteren Grenze von 1 oder größer und enden bei einer oberen Grenze von 10 oder weniger, z.B. 1 bis 1,7 oder 3,2 bis 8,1 oder 5,5 bis 10.

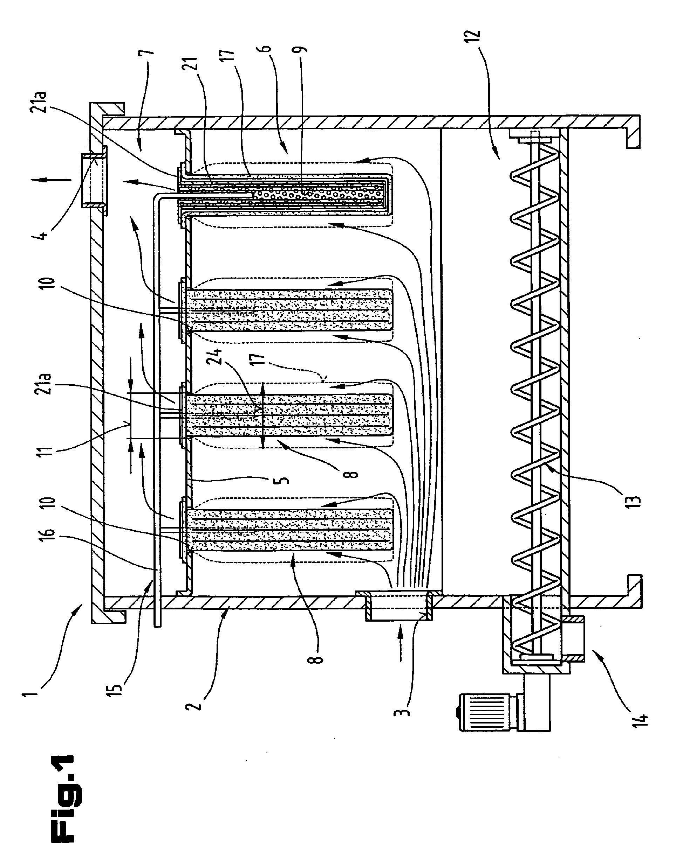

Fig. 1 zeigt ein Ausführungsbeispiel einer Filtervorrichtung 1 zur Reinigung von Luftströmen, welche mit darin schwebenden Partikeln bzw. Verunreinigungen, wie zum Beispiel Stäuben oder Spänen, beladen sind. Die Filtervorrichtung 1 dient also zur Reinigung eines zugeführten bzw. hindurchgeleiteten Luftstromes, welcher mit diversen Festkörperpartikeln beladen ist. Mittels der Filtervorrichtung 1 wird zumindest ein bestimmter Anteil bzw. eine bestimmte Größe dieser Partikel aus dem Luftstrom abgeschieden.

Hierfür umfasst die Filtervorrichtung 1 ein Gehäuse 2 mit wenigstens einer Lufteintrittsöffnung 3 für verunreinigte, beispielsweise mit Stäuben beladene Luft. Am Gehäuse 2 ist weiters wenigstens eine Luftaustrittsöffnung 4 vorgesehen, über welche die in der Filtervorrichtung 1 behandelte bzw. gereinigte Luft abgeleitet wird oder in die unmittelbare Umgebung um das Gehäuse 2 entweichen kann. Zur Erzielung einer entsprechenden Luftströmung ist, wie an sich bekannt, wenigstens ein nicht dargestellter Unterdruckerzeuger vorgesehen. Dieser ist bevorzugt auf der Reingasseite der Filtervorrichtung 1, das heißt nach den jeweiligen Filterstufen angeordnet.

Als Unterdruckerzeuger ist vorzugsweise ein Absaugungsgebläse vorgesehen, mit welchem die zu reinigende Luft in die Filtervorrichtung 1 eingesaugt bzw. durch die Filtervorrichtung 1 hindurchgesaugt wird. Alternativ ist es auch möglich, anstelle eines Unterdruckerzeugers oder zusätzlich zu einem Unterdruckerzeuger auf der Rohgasseite, das heißt in Strömungsrichtung vor der Lufteintrittsöffnung 3, einen Überdruckerzeuger, insbesondere ein Druckluftgebläse vorzusehen. Im Gehäuse 2 ist wenigstens eine Trennwand bzw. Trennplatte 5 ausgeführt, welche auch als Trennboden bzw. als Trennpanel bezeichnet werden kann. Diese Trennplatte 5 unterteilt das Gehäuse 2 in eine Schmutzluftkammer 6 und in eine Reinluftkammer 7.

Innerhalb des Gehäuses 2 ist zumindest ein Filterelement 8 angeordnet, mit welchem die Partikel aus der zu reinigenden Luft abgetrennt bzw. abgesondert werden. Insbesondere werden die Verunreinigungen im zugeführten Luftstrom bzw. Rohgas an dem zumindest einen Filterelement 8 abgeschieden bzw. zurückgehalten. Das wenigstens eine Filterelement 8 ragt dabei in die Schmutzluftkammer 6 bzw. ist das Filterelement 8 großteils innerhalb der Schmutzluftkammer 6 angeordnet. Das Filterelement 8 ist bevorzugt als Hohlkörper 9 ausgebildet, dessen Mantel- bzw. Oberfläche eine filternde Luftströmungsverbindung zwischen der Schmutzluftkammer 6 und der Reinluftkammer 7 darstellt. Insbesondere ist die Mantel- bzw. Oberfläche jedes der Filterelemente 8 ausreichend gas- bzw. luftdurchlässig, wohingegen die abzusondernden Partikel bzw. Schwebestoffe am Filterelement 8 weitestgehend hängen bleiben und nicht in die Reinluftkammer 7 übergeleitet werden.

In der Trennplatte 5 ist zumindest ein Durchbruch 10 ausgebildet, durch welchen jeweils ein Filterelement 8 in bevorzugter Art und Weise ausgehend von der Reinluftkammer 7 in Richtung zur Schmutzluftkammer 6 einschieb- und festlegbar ist. Zur Positionierung und/oder Halterung des Filterelementes 8 an der Trennplatte 5 kann am Filterelement 8 wenigstens ein kragen- bzw. bundartiger Fortsatz ausgebildet sein, welcher ein völliges Hindurchschieben des Filterelementes 8 in die Schmutzluftkammer 6 unterbindet.

Entsprechend einer vorteilhaften Ausführungsform weist die Filtervorrichtung 1 in ihrem unteren Endabschnitt, insbesondere im Anschluss an die Schmutzluftkammer 6 eine trichterförmige Auffangwanne 12 für aus dem Luftstrom abgeschiedene Partikel auf. In der Auffangwanne 12 kann eine Austragungsvorrichtung 13, beispielsweise in einer Art einer Förderschnecke, vorgesehen sein, um die in der Auffangwanne 12 angesammelten Partikel an einer Austrittsöffnung 14 dosierbar bzw. kontinuierlich ausgeben zu können. Alternativ ist auch eine Ableitung der angesammelten Partikel unter Schwerkrafteinwirkung denkbar.

Entsprechend einer vorteilhaften Ausführungsform umfasst die Filtervorrichtung 1 weiters wenigstens eine Abreinigungsvorrichtung 15 zur bedarfsweisen Abreinigung bzw. automatisierten Reinigung der Filterelemente 8. Insbesondere nach längerer Einsatzdauer kann an der äußeren Oberfläche bzw. Mantelfläche der Filterelemente 8 eine unerwünscht dichte bzw. intensive Ansammlung von abgeschiedenen Partikeln bzw. Stäuben auftreten. Diese am Filterelement 8 haftenden Abscheidungen bzw. Partikel verschlechtern zunehmend die Performance der Filtervorrichtung 1, nachdem diese Ansammlungen bzw. Ablagerungen die Filterelemente 8 quasi zunehmend verstopfen und dadurch unter anderem den Strömungswiderstand der Filtervorrichtung 1 erhöhen. Zur bedarfsweisen und/oder automatisiert gesteuerten Reinigung der Filterelemente 8 kann die Abreinigungsvorrichtung 15 einen integralen Bestandteil der Filtervorrichtung 1 darstellen. Wie an sich bekannt, kann die Abreinigungsvorrichtung 15 durch eine Druckluftreinigungsvorrichtung 16 gebildet sein. Diese Druckluftreinigungsvorrichtung 16 umfasst einen nicht dargestellten Drucklufterzeuger, dessen Druckluft über Rohrleitungen und nicht dargestellte Ventile gezielt als Pressluft bzw. Druckluftimpulse in den Innenraum der hohlkörperartigen Filterelemente 8 eingeleitet wird. Diese Druckluftimpulse bzw. Druckluftphasen bewirken ein Abstoßen bzw. Abfallen von Partikeln, welche an der äußeren Ober- bzw. Filterfläche der Filterelemente 8 anhaften.

Die Druckluftreinigungsvorrichtung 16 kann zur Intensivierung ihrer Reinigungsleistung auch Venturi-Elemente bzw. Düsen, eine Mehrzahl von Düsenreihen, bewegliche Druckluftdüsen und dergleichen umfassen. Nach einer Aktivierung der Abreinigungsvorrichtung 15 fällt zumindest ein gewisser Anteil der anhaftenden Partikel von der äußeren Ober- bzw. Filterfläche der Filterelemente 8 ab. Diese Partikel werden durch die Einwirkung von Pressluft aktiv abgestoßenen und unter Schwerkrafteinwirkung in den Bodenbereich der Schmutzluftkammer 6 transferiert bzw. in der Auffangwanne 12 oder in einem entsprechenden Sammelbehältnis aufgenommen. Alternativ oder in Kombination zu einer Druckluftreinigungsvorrichtung 16 ist es auch möglich, auf Vibrationsbewegungen basierende Abreinigungsvorrichtungen 15 für die Filterelemente 8 vorzusehen.

Die filternde Mantel- bzw. Oberfläche des wenigstens einen Filterelementes 8 ist durch einen schlauch- oder sackartigen Filterstrumpf 17 gebildet. Dieser bevorzugt sackartige Filterstrumpf 17 ist aus einem formflexiblen und ausreichend gas- bzw. luftdurchlässigen Material, insbesondere aus einem gewebe- bzw. gitterartigen Filtermaterial gebildet. Als Filtermaterial eignen sich dabei textilartige oder synthetische Werkstoffe mit einer Netz- bzw. Gitterstruktur in der entsprechenden Maschen- bzw. Gitterweite, um die jeweiligen Partikelgrößen zurückhalten bzw. aus dem Luftstrom absondern zu können.

Wesentlich ist dabei, dass ein expandierter bzw. in seinem Volumen maximal gestreckter bzw. ausgedehnter Filterstrumpf 17 hinsichtlich seines lichten Innendurchmessers 24 bzw. Innenumfangs größer dimensioniert ist, als ein Durchmesser 11 bzw. Umfang des Durchbruchs 10 in der Trennplatte 5. Das heißt, dass ein maximal expandierter bzw. in seinem Sack- oder Innen-Volumen maximal erweiterter Filterstrumpf 17 - wie dies in Fig. 1 mit strichlierten Linien schematisch angedeutet wurde - ausgehend von der Reinluftkammer 7 nicht durch den Durchbruch 10 passen würde bzw. nicht in die Schmutzluftkammer 6 gelangen könnte, wäre der Filterstrumpf 17 nicht formflexibel bzw. in sich nicht biegeweich und somit mühelos auf ein kleineres Volumen bzw. auf einen kleineren Querschnitt zusammenfalt- bzw. zusammendrückbar.

Wie am besten anhand der strichlierten Darstellungen in Fig. 1 ersichtlich ist, besitzt der Filterstrumpf 17 im Ruhezustand der Filtervorrichtung 1, d.h. ohne äußerer Einwirkung von Strömungskräften, eine räumliche Erstreckung bzw. ein maximales Innenvolumen, welches in diesem quasi expandierten Zustand ein Einsetzen des Filterstrumpfes 17 ausgehend von der Reinluftkammer 7 in Richtung zur Schmutzluftkammer 6 unterbinden würde, wäre der Filterstrumpf 17 nicht aus einem in sich formflexiblen bzw. beschädigungsfrei zusammendrückbaren Material, wie z.B. einem textilartigen Gewebe gebildet. Insbesondere könnte der Filterstrumpf 17 im expandierten bzw. maximal aufgeweiteten Zustand nicht durch den Durchbruch 10 in der Trennplatte 5 gesteckt werden, da dessen Außendurchmesser in diesem Zustand deutlich größer ist, als der Durchmesser 11 des vorgesehenen Durchbruches 10 in der Trennplatte 5. Demgegenüber ist ein formstabiler, innerer Stützkörper 21 für den Filterstrumpf 17 derart dimensioniert, dass er durch den Durchbruch 10 hindurchgesteckt werden kann, bis er mit seinem erweiterten, oberen Kragenabschnitt 21 a an der Trennplatte 5 aufliegt bzw. in der Durchsteckbewegung gegenüber dem Durchbruch 10 begrenzt wird.

Beim Betrieb der Filtervorrichtung 1 legt sich der im Ruhezustand gegenüber dem Stützkörper 21 relativ lockere bzw. relativ großvolumige Filterstrumpf 17 - strichliert dargestellt - infolge des äußeren Strömungsdruckes bzw. aufgrund des im Hohlraum 9 des Filterelementes 9 vorherrschenden Unterdruckes deutlich enger an den Stützkörper 21 an, wie dies in Fig. 1 mit vollen Linien angedeutet wurde. D.h., dass der Filterstrumpf 17 durch äußere Einwirkung einer Luftströmung in seinem Volumen quasi schrumpft, indem er im Zusammenwirken mit dem inneren Stützkörper 21 eine Mehrzahl von Oberflächenwellen bzw. Oberflächenfalten bildet, wie dies mit vollen, vertikal verlaufenden Linien innerhalb der Filterstrümpfe 17 angedeutet wurde. Die relativ große Oberfläche und somit auch die relativ große Filterfläche des Filterstrumpfes 17 resultiert dabei in einer deutlichen Verbesserung der Filterperformance des Filterelementes 8.

Entsprechend einer vorteilhaften Ausführungsform ist der Filterstrumpf 17 in Seitenansicht flaschenartig ausgeführt, wobei der sich verjüngende Teilabschnitt des Filterstrumpfes 17 einem für die Montage bzw. Aufhängung des Filterelementes 8 vorgesehenen Endabschnitt zugeordnet bzw. nächstliegend ist.

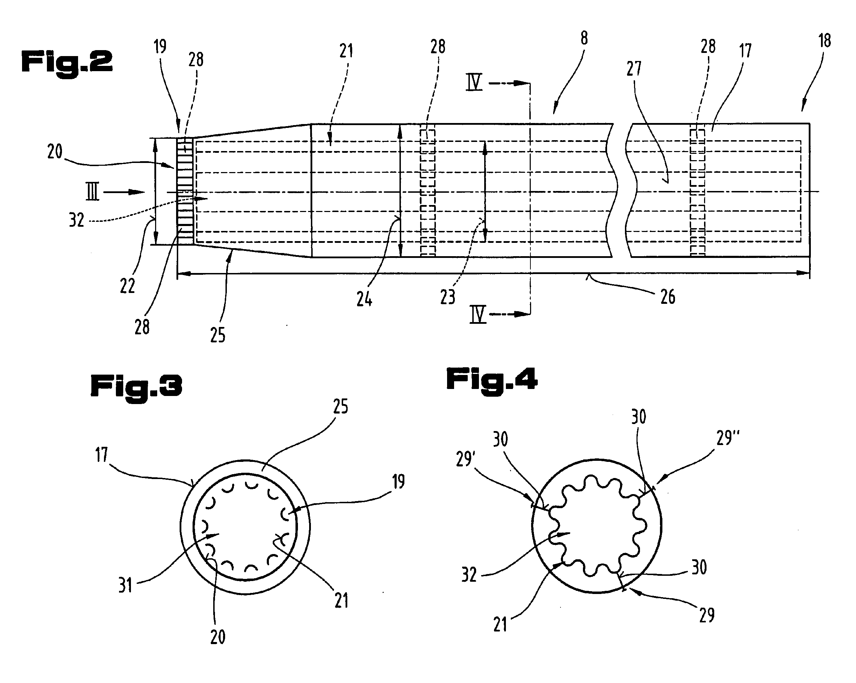

In den Fig. 2 bis 4 ist eine vorteilhafte Ausführungsform eines Filterelementes 8, wie es in einer Filtervorrichtung 1 gemäß Fig. 1 zum Einsatz kommen kann, schematisch veranschaulicht. Dieses Filterelement 8 umfasst als Filtermedium zumindest einen formflexiblen Filterstrumpf 17, welcher die äußere, filternde Oberfläche des Filterelementes 8 bildet. Ein solches Filterelement 8 mit einem formflexiblen, sackartigen Filterstrumpf 17 ist im Vergleich zu den aus dem Stand der Technik bekannten Filterpatronen mit mehrschichtig gefalteten Filterpapieren relativ kostengünstig und vergleichsweise robust. Insbesondere kann das gattungsgemäße Filterelement 8 gemäß den Fig. 2 bis 4 in relativ kurzen Intervallen problemlos gewartet werden. Darüber hinaus kann das Filtermedium, insbesondere der Filterstrumpf 17 beim Erreichen der maximalen Nutzungsdauer bzw. seiner Effizienzgrenze relativ kostengünstig ersetzt werden, um eine möglichst gute bzw. relativ konstant bleibende Filterperformance zu erzielen.

Die eigentliche Filterfläche bzw. das Filtermedium des gattungsgemäßen Filterelementes 8 ist also durch zumindest einen schlauch- oder sackartigen Filterstrumpf 17 gebildet. Dieser Filterstrumpf 17 besitzt eine ausreichende Durchlässigkeit für Gas- bzw. Luftströmungen. Das Durchlässigkeitsverhalten bzw. die Maschenweite dieses bevorzugt sackartigen Filterstrumpfes 17 ist jedoch derart, dass die plangemäß abzuscheidenden Partikel in ausreichendem Ausmaß an der äußeren Oberfläche des Filterstrumpfes 17 abgefangen und vom Gas- bzw. Luftrom, der durch das Filterelement 8 geleitetet wird, abgesondert werden. Der Filterstrumpf 17 besteht aus einem formflexiblen, in sich relativ instabilen Material. Bevorzugt ist der Filterstumpf 17 aus einem gewebeartigen bzw. textilähnlichen Material gebildet, das zur Abtrennung bzw. Abscheidung der jeweiligen Partikel aus dem der Außen- bzw. Oberfläche des Filterstumpfes 17 zugeführten Luftstrom konzipiert ist. Derartige formflexible Materialien bzw. Filterstrümpfe 17 sind hinsichtlich des jeweils eingesetzten Filtermaterials bzw. Werkstoffes in vielfältigen Ausführungen aus dem Stand der Technik bekannt.

Der sackartige Filterstrumpf 17 ist an seinem ersten axialen Ende 18 geschlossen ausgebildet und bildet dadurch quasi einen Sackboden aus. Dieses geschlossene Ende 18 des Filterstrumpfes 17 kann dabei aus dem gleichen formflexiblen und luftdurchlässigen Material gebildet sein, wie die Mantel- bzw. Filterfläche des Filterstrumpfes 17. Alternativ oder in Kombination dazu ist es auch möglich, dieses erste axiale Ende 18, insbesondere die Grund- bzw. Basisfläche des Filterstrumpfes 17 luftdicht auszuführen bzw. mittels einer Bodenplatte zu verstärken. Ebenso ist es möglich, das erste axiale Ende 18 eines schlauchartigen Filterstrumpfes 17 einfach durch eine Schweiß- oder Garnnaht zu verschließen, um den Eintritt von Partikeln in den Innenraum des Filterelementes 8 zu unterbinden. Entsprechend einer im wesentlichen sackartigen Ausbildung des Filterstrumpfes 17 ist an seinem zweiten bzw. distalen Ende 19 eine Öffnung, insbesondere eine Luftaustrittöffnung 20 für einen möglichst ungehinderten Austritt des gereinigten Luftstroms aus dem Filterstrumpf 17 bzw. aus dem Inneren des Filterelementes 8 ausgebildet. Insgesamt kann der aus einem formflexiblen, beispielsweise textilartigen Material gebildete Filterstrumpf 17 als einseitig offener, luftdurchlässiger Filtersack bezeichnet werden, wobei bevorzugt die Außenfläche diese Filtersackes die Filterfläche des Filterelementes 8 darstellt.

Im Inneren des sack- bzw. schlauchartigen Filterstrumpfes 17 ist ein in mechanischer Hinsicht ausreichend stabiler Stützkörper 21 für den formflexiblen Filterstrumpf 17 vorgesehen. Dieser Stützkörper 21 hat unter anderem die Aufgabe, den formflexiblen bzw. sackartigen Filterstrumpf 17 derart zu stützen, dass der Filterstrumpf 17 eine hohle Form bzw. eine Mindestgröße hinsichtlich des Volumens einnimmt bzw. unter Einfluss der Luftströmung eine definierte Körperform beibehält. Je nach Körperform bzw. struktureller Ausgestaltung des Stützkörpers 21 nimmt der sackartige Filterstrumpf 17, der den Stützkörper 21 zumindest abschnittsweise umkleidet, eine hohlkörperartige Form mit weitestgehend zylindrischer, elliptischer, polygoner oder sonstiger Querschnittsform ein.

Der Filterstrumpf 17 ist im Verhältnis zum darin angeordneten bzw. in den Filterstrumpf 17 eingesetzten Stützkörper 21 bevorzugt derart dimensioniert, dass er im inaktiven bzw. nicht umströmten Zustand den Stützkörper 21 vergleichsweise locker bzw. mit seitlichem Spielraum umgibt und bei Einwirkung einer Luftströmung eine Falten- oder Wellenbildung und eine enger anliegende Umkleidung des Stützkörpers 21 durch den Filterstrumpf 17 vorliegt.

Ein Durchmesser 22, insbesondere der kleinste Durchmesser 22 der Luftaustrittsöffnung 20 im Filterstrumpf 17 ist dabei in etwa gleich groß oder geringfügig größer bemessen, als ein größter Außendurchmesser 23 bzw. Außenumfang des Stützkörpers 21. Das heißt, dass die Öffnungsweite des Filterstrumpfes 17 an seinem offenen bzw. zweiten axialen Ende 19 derart bemessen ist, dass der Stützkörper 21 in den Filterstrumpf 17 eingeschoben und daraus wieder entnommen werden kann. Alternativ ist es selbstverständlich auch möglich, den Filterstrumpf 17 relativ zum Stützkörper 21 aufzuschieben, wobei die Luftaustrittsöffnung 20 des Filterstrumpfes 17 derart dimensioniert ist, dass ein Aufschieben und Abziehen des Filterstrumpfes 17 relativ zum Stützkörper 21 möglich ist. Die Luftaustrittsöffnung 20 ist also derart dimensioniert, dass ein annähernd koaxiales Ineinandersetzten und nachfolgendes, bedarfsweises Trennen zwischen dem Stützkörper 21 und dem Filterstrumpf 17 problemlos ermöglicht ist.

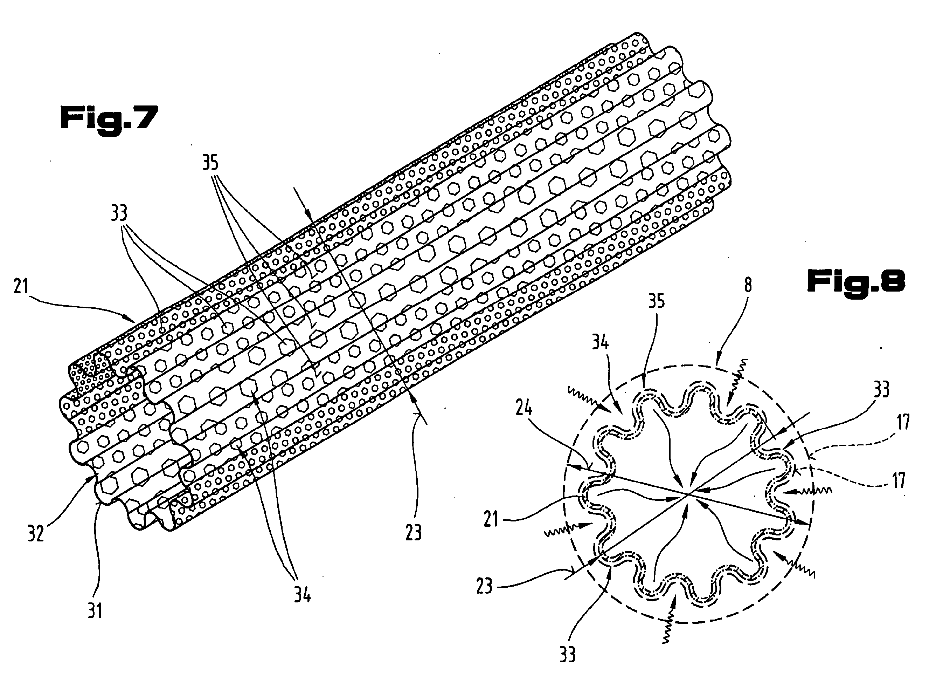

Entsprechend einer vorteilhaften Ausgestaltung ist ein Innendurchmesser 24 oder eine lichte Weite bzw. ein Innenumfang des Filterstrumpfes 17 unmittelbar im Anschluss an sein offenes, axiales Ende 19 vergleichsweise größer dimensioniert, als der Durchmesser 22 des Filterstrumpfes 17 im Bereich der Luftaustrittsöffnung 20. Ferner ist der Innendurchmesser 24 des Filterstrumpfes 17 in Querschnittsbereichen zwischen der Luftaustrittsöffnung 20 und seinem geschlossenen Ende 18 deutlich größer dimensioniert, als der größte Außendurchmesser 23 bzw. der größte Außenumfang des Stützkörpers 21. Das heißt, dass der Filterstrumpf 17 den Stützkörper 21 in weitläufigen Abschnitten relativ locker umgibt, sodass Wellen- bzw. Faltenbildungen des Filterstrumpfes 17 möglich sind, nachdem der Filterstrumpf 17 auf den Stützkörper 21 aufgezogen bzw. der Stützkörper 21 in den Filterstrumpf 17 eingesetzt wurde. Diese lockere bzw. lose Umhüllung des Stützkörpers 21 mittels dem Filterstrumpf 17 ist hinsichtlich der Filterperformance von Vorteil, wie dies im Nachfolgenden noch beschrieben wird. Jedenfalls ist zwischen der äußeren Stütz- bzw. Mantelfläche des Stützkörpers 21 und der Innenfläche des Filterstrumpfes 17 ausreichend Spielraum vorgesehen, um im Filterstrumpf 17 mehrere Falten- bzw. Wellenbildungen zu ermöglichen, wie dies am besten aus einer Zusammenschau der Figuren 4 und 8 ersichtlich ist. Insbesondere sind die Querschnittsdimensionen des Filterstrumpfes 17 im Vergleich zu den Querschnittsdimensionen des Stützkörpers 21 derart, dass der formflexible Filterstrumpf 17 bei den während des Betriebs auftretenden Luftströmungen rings um das Filterelement 8 bzw. in Richtung zum Innenraum des Filterelementes 8 eine Mehrzahl von Falten oder Schleifen bzw. eine Vielzahl von meanderförmigen Umlenkungen ausbilden kann, wie dies am besten aus Fig. 8 ersichtlich ist.

Zur Erzielung einer ausreichend lockeren Umhüllung des Stützkörpers 21 via den Filterstrumpf 17 kann ein Innendurchmesser 24 oder Innenumfang des Filterstumpfes 17 zumindest in etwa 10 % größer sein, insbesondere problemlos bis zu 80% größer sein, als der größte Außendurchmesser 23 bzw. der größte Außenumfang des Stützkörpers 21. Zweckmäßig ist es, den Innendurchmesser 24 oder den Innenumfang des Filterstrumpfes 17 um 20 % bis 40 % größer zu dimensionieren, als den größten Außendurchmesser 23 bzw. den größten Außenumfang des Stützkörpers 21. Wesentlich ist, dass der Filterstrumpf 17 den Stützkörper 21 bei atmosphärischem Umgebungsdruck relativ locker umhüllt und keinesfalls eng am Außenumfang des Stützkörpers 21 anliegt. Der formflexible, luftdurchlässige Filterstrumpf 17 soll also im inaktiven, d.h. strömungsfreien Zustand des Filterelementes 8 den Stützkörper 21 mit ausreichend Spielraum umgeben und eine lockere Umhüllung für den Stützkörper 21 darstellen, wobei der Filterstrumpf 17 an seiner Außen- bzw. Filterfläche eine faltenartige Kontur bzw. eine periodische Wellenstruktur annehmen kann, wenn das Filterelement 8 aktiv ist bzw. von außen mit Luftströmungen beaufschlagt wird, wie dies in beispielhafter Art und Weise in Fig. 8 schematisch dargestellt wurde. Diese Faltenbildung bzw. die durch den Strömungsdruck hervorgerufene Anformung des formflexiblen Filterstrumpfes 17 an die äußere Stütz- bzw. Mantelfläche des Stützkörpers 21 begünstigt die Filterleistung des Filterelementes 8. Diese abschnittsweise relativ exakte und abschnittsweise unter Umständen relativ unstrukturierte Formanpassung zwischen dem Filterstrumpf 17 und dem Stützkörper 21 erfolgt vorzugsweise durch die Kraftwirkung der zu reinigenden Luftströmung, insbesondere durch den im hohlen Innenraum des Filterelementes 8 aufgebauten Unterdruck, welcher während der bestimmungsgemäßen Verwendung des Filterelementes 8 vorherrscht.

Der Filterstrumpf 17, welcher die primäre Aufgabe besitzt, zumindest einen bestimmten Anteil der Partikel aus dem Luftstrom herauszufiltern, weist in Abhängigkeit der herauszufiltemden Partikelgröße bzw. in Abhängigkeit des abzusondernden Partikelgrößenbereiches eine vorbestimmte Maschenweite bzw. Durchlässigkeit auf. Der Filterstrumpf 17 ist dabei aus einem dehnungsfesten bzw. kaum dehnbaren Material gebildet, wodurch die im Zusammenwirken mit dem Stützkörper 21 während des Aktivzustandes des Filterelementes 8 auftretende Wellen- bzw. Faltenbildung hauptsächlich aufgrund der im Vergleich zum innen liegenden Stützkörpers 21 deutlich größeren, gestreckten Länge des Filtermediums des Filterstrumpfes 17 erzielt wird.

Insbesondere wird durch die markant lockere bzw. mit radialem Spielraum dimensionierte Umhüllung des Stützkörpers 21 mittels dem Filterstrumpf 17 eine möglichst gleichförmig bzw. plangemäße Formanpassung des formflexiblen Filterstrumpfes 17 an die Oberflächenkonturen des Stützkörpers 21 erzielt, wie dies in Fig. 8 exemplarisch und teilweise idealisiert veranschaulicht wurde. Der Filterstrumpf 17 wird dabei bei der Angleichung an den Stützkörper 21 nicht oder nur marginal gedehnt. Die Formanpassung des Filterstrumpfes 17 an die äußere Oberflächen- bzw. Stützkontur des Stützkörpers 21 basiert überwiegend auf der vergleichsweise größeren Dimensionierung des Filterstrumpfes 17 bzw. auf der großvolumigeren Erstreckung des Filterstrumpfes 17 im Vergleich zum Stützkörper 21.

Wie am besten der Fig. 2 entnommen werden kann, ist die freie Luftaustrittsöffnung 20 des Filterstrumpfes 17 in ihrem Querschnitt vergleichsweise enger ausgeführt, als die an die Luftaustrittsöffnung 20 anschließenden Querschnittsebenen durch den schlauch- bzw. sackartigen Mantelabschnitt des Filterstrumpfes 17.

Entsprechend einer vorteilhaften Weiterbildung kann der Filterstrumpf 17 in seinem die Luftaustrittsöffnung 20 aufweisenden Endabschnitt und bei Bezugnahme auf eine Erstreckung ausgehend vom Inneren des Filterstrumpfes 17 in Richtung zur Luftaustrittsöffnung 20 kegelstumpfförmig verjüngend ausgeführt sein. Insbesondere kann der Filterstrumpf 17 ausgehend von seinem offenen, axialen Ende 19 umfassend die Luftaustrittsöffnung 20, in Richtung zu seinem geschlossen ausgeführten Ende 18 einen sich kegelstumpfförmig erweiternden Übergangsabschnitt 25 aufweisen. Der konische bzw. kegelstumpfförmige Übergangsabschnitt 25 erstreckt sich bevorzugt nur über einen Bruchteil einer gesamten axialen Länge 26 des Filterstrumpfes 17. Unmittelbar anschließend an den kegelstumpfförmigen, schlauchartigen Übergangsabschnitt 25 weist der Filterstrumpf 17 bis zu oder nahe zu seinem geschlossenen Ende einen schlauchartigen Mantelabschnitt 27 mit zylindrischem oder elliptischem Querschnitt auf, der sich mit konstanten oder weitestgehend konstant bleibenden QuerschnittsDimensionen, insbesondere Innenumfang oder Innendurchmesser 24, bis zum geschlossenen Ende 18 des Filterstrumpfes 17 erstreckt.

Entsprechend einer vorteilhaften Ausführungsform kann der Filterstrumpf 17 an seiner Luftaustrittsöffnung 20 und/oder zwischen der Luftaustrittsöffnung 20 und seinem geschlossenen Ende 18 zumindest ein elastisch dehnbares Bundelement 28 aufweisen. Dieses Bundelement 28 ist derart ausgebildet, dass dessen elastische Kraftwirkung eine elastische Einengung bzw. Einschnürung des Innendurchmessers 24 bzw. des Durchmessers des Filterstrumpfes 17 in radialer Richtung zum Stützkörper 21 bewirkt. Dieses Bundelement 28 kann also direkt im Umfangsbereich um die Luftaustrittsöffnung 20 vorgesehen sein und/oder in Abschnitten zwischen der Luftaustrittsöffnung 20 und dem geschlossenen Ende 18 ausgebildet sein. Derartige Bundelemente 28 unterteilen den Filterstrumpf 17 in zumindest zwei in axialer Richtung aufeinander folgende Teilabschnitte. Die elastischen Bundelemente 28 bewirken, dass der Filterstrumpf 17 im Nahbereich um das elastische Bundelement 28 mit elastischer Vorspannung am Stützkörper 21 anliegt bzw. gegen den Stützkörper 21 gedrängt wird. Dadurch kann eine ordnungsgemäße Verteilung bzw. eine plangemäße Relativpositionierung des Filterstrumpfes 17 gegenüber dem Stützkörper 21 gewährleistet werden. Derartige elastische Bundelemente 28 sind beispielsweise bei Ärmelenden von Kleidungsstücken in ähnlicher Art und Wirkungsweise bekannt. Die Bundelemente 28 können zumindest einen elastischen Gummizug im textilen bzw. gewebeartigen Filterstrumpf 17 aufweisen.

Zur Gewährleistung einer möglichst gleichmäßigen Verteilung des Filterstrumpfes 17, welcher den Stützkörper 21 grundsätzlich locker umhüllt bzw. hüllenartig umgibt, können zumindest zwei, bevorzugt drei über den Querschnittumfang des Filterstrumpfes 17 und des Stützkörpers 21 verteilt angeordnete Verbindungsstellen 29-29" zwischen dem Filterstrumpf 17 und dem Stützkörper 21 vorgesehen sein, wie dies in Fig. 4 schematisch dargestellt wurde. Diese Verbindungsstellen 29-29" sollen eine einseitige Ansammlung bzw. eine stark ungleichmäßige Aggregation des Filterstrumpfes 17 an einzelnen Umfangsabschnitten vermeiden und eine möglichst gleichmäßige Aufteilung des Filterstrumpfes 17 relativ zur Stütz- bzw. Mantelfläche des Stützkörpers 21 sicherstellen.

An den jeweiligen Verbindungsstellen 29-29", welche in axialer Richtung und/oder in Umfangsrichtung um den Stützkörper 21 vorgesehen sind, ist jeweils wenigstens ein Verbindungselement 30 ausgebildet. Dieses Verbindungselement 30 kann durch ein beliebiges, aus dem Stand der Technik bekanntes Kupplungsorgan gebildet sein, welches bevorzugt werkzeuglos aktiviert und deaktiviert werden kann. Insbesondere ist es möglich, als Verbindungselement 30 zwischen dem Filterstrumpf 17 und dem Stützkörper 21 wenigstens eine schnapperartige Druckknopfverbindung, wenigstens eine Klammer, wenigstens ein magnetisch wirksames Halteelement oder dergleichen auszubilden. Insbesondere kann im bzw. am Filterstrumpf 17 zumindest ein Permanentmagnet angeordnet sein, welcher mit ausreichender magnetischer Haltekraft eine kraftschlüssige Verbindung zwischen dem ferromagnetischen bzw. metallischen Stützkörper 21 und dem Filterstrumpf 17 gewährleistet. Die Verbindungsstellen 29-29" bzw. die entsprechenden Verbindungselemente 30 sind jedenfalls derart konzipiert, dass eine plangemäße bzw. eine möglichst gleichmäßige Verteilung des Filterstrumpfes 17 in Umfangsrichtung und/oder in axialer Richtung des Stützkörpers 21 gewährleistet ist, wie dies vor allem der schematischen und exemplarischen Darstellung gemäß Fig. 4 zu entnehmen ist.

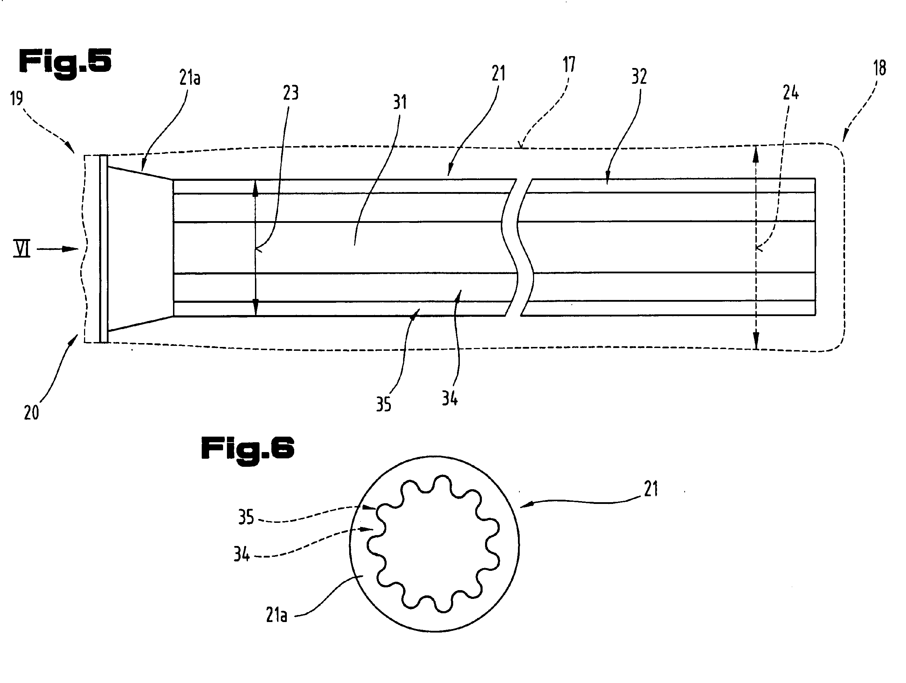

Wie am besten den Fig. 5 bis 7 zu entnehmen ist, kann die Mantel- bzw. Stützfläche des hohlen bzw. rohrartigen Stützkörpers 21 durch ein luftdurchlässiges Tafel- bzw. Plattenelement 31 gebildet sein. Insbesondere kann der Stützkörper 21 durch ein im Ursprungszustand ebenflächiges bzw. tafelartiges Plattenelement 31 gebildet sein, welches zu einem Hohlkörper 32 mit zylindrischer, elliptischer oder polygoner Querschnittsform zusammengerollt bzw. zusammengesetzt ist. Der Stützkörper 21 bzw. dessen Plattenelement 31 weist jedenfalls eine hohe Luftdurchlässigkeit, insbesondere einen möglichst geringen Strömungswiderstand gegenüber Luftströmungen auf. Der Stützkörper 21 bzw. dessen zu einem Hohlkörper geformtes Plattenelement 31 kann beispielsweise durch ein Lochblech oder ein so genanntes Streckmetall-Element gebildet sein, welches zum einen eine hohe Luftdurchlässigkeit aufweist und zum anderen eine ausreichende Stabilität besitzt, um den auftretenden Kräften, welche vor allem durch die Luftströmung hervorgerufen werden, standhalten zu können.

Das luftdurchlässige Plattenelement 31 bzw. der daraus gebildete Stützkörper 21 weist bevorzugt eine Vielzahl spalten- und zeilenweise angeordneten, gleichmäßig verteilten Durchbrüchen 33 auf. Ein Querschnitt der bevorzugt strukturiert verteilten Durchbrüche 33 beträgt jeweils zwischen 0,5 cm2 und 5 cm2, bevorzugt in etwa 1 cm2. Die Wahl der Querschnittsgröße der Durchbrüche 33 hängt im Wesentlich von der Reißfestigkeit des Filterstrumpfes 17, von den auftretenden Strömungskräften am Filterstrumpf 17 und von der Maschenweite des Filterstrumpfes 17 ab. Vor allem bei besonders reißfesten Filterstrümpfen 17 ist es auch möglich, den Querschnitt der Durchbrüche 33 im Stützkörper 21 größer als 5 cm2, beispielsweise bis zu 50 cm2 auszubilden. Dadurch kann der Stützkörper 21 in Bezug auf seine Masse relativ leicht ausgebildet werden. Zudem weist ein solcher Stützkörper 21 mit relativ großen Durchbrüchen 33 einen relativ geringen Strömungswiderstand auf. Günstig ist es, wenn die Summe der Querschnitte der Durchbrüche 33 im luftdurchlässigen Plattenelement 31 bzw. im Stützkörper 21 größer ist, als eine Summe der zwischen den Durchbrüchen 33 verbleibenden Stützfläche für den Filterstrumpf 17. Derartige Eigenschaften können insbesondere mit einem so genannten Streckmetall-Element problemlos erzielt werden. Ein solches Streckmetall-Element weist eine hohe Luftdurchlässigkeit bzw. einen geringen Strömungswiderstand und eine ausreichende Stabilität auf, um eine entsprechende Stützwirkung für das formflexible Material, insbesondere für den textilartigen Werkstoff des Filterstrumpfes 17 zu bieten.

Entsprechend einer vorteilhaften Ausführungsform, wie sie in den Fig. 5 bis 7 veranschaulicht wurde, ist das luftdurchlässige Plattenelement 31 bzw. der damit aufgebaute Stützkörper 21 im Querschnitt wellenförmig ausgebildet. Insbesondere kann das im Ursprungszustand tafelartige Plattenelement 31, welches nachfolgend zu einem Hohlkörper 32 verarbeitet wird, durch ein luftdurchlässiges bzw. gelöchertes Wellblechelement gebildet sein. Derartige Wellbleche können durch wellenartige Umformung einer ebenflächigen Blechtafel bzw. eines zuvor ebenflächigen Streckmetall-Elementes erzielt werden. Das im Querschnitt entsprechend gewellte, luftdurchlässige Plattenelement 31 wird also in einem weiteren Umformungs- bzw. Arbeitsschritt zu einem luftdurchlässigen, bevorzugt zylindrischen Hohlkörper 32 geformt, wie dies in Fig. 7 beispielhaft dargestellt wurde. Alternativ wäre es auch möglich, die Hohlkörperform des Stützkörpers 21 durch einen Extrusionsvorgang, insbesondere durch Kunststoff-Extrusion zu schaffen und die Luftdurchlässigkeit des Mantelabschnittes durch mechanische Bearbeitungen, wie z.B. Bohr-, Fräs- oder Stanzvorgänge zu erzielen.

Günstig ist es, wenn der hohle, bezüglich seiner Stütz- bzw. Mantelfläche luftdurchlässige Stützkörper 21 im Querschnitt stern- oder zahnradförmig ausgebildet ist, wie dies vor allem aus der Querschnittsdarstellung gemäß Fig. 6 beispielhaft ersichtlich ist. Dieser Stützkörper 21 weist als Querschnitts-Außenkontur mehrere, in Umfangsrichtung des Stütz- bzw. Mantelabschnittes aufeinander folgende Vertiefungen 34 und Erhebungen 35 auf. Diese unmittelbar aufeinander folgenden Vertiefungen 34 und Erhebungen 35 ergeben die gewellte bzw. stern- oder zahnradförmige Querschnittskontur des Stützkörpers 21. Wesentlich ist, dass der Stützkörper 21 durch diese nutartigen Vertiefungen 34 und wulstartigen Erhebungen 35 bei einem vorbestimmten Durchmesser von beispielsweise 160 mm, eine stark vergrößerte Stütz- bzw. Mantelfläche aufweist, welche durch die Oberfläche der aneinander gereihten Vertiefungen 34 und Erhebungen 35 gebildet ist. Jedenfalls weist der Stützkörper 21 durch die zahlreichen, axial verlaufenden, nutartigen Vertiefungen 34 und die zahlreichen, axial verlaufenden, wulstartigen Erhebungen 35 eine stark vergrößerte Mantel- bzw. Stützfläche für den Filterstumpf 17 auf - im Vergleich zu einem rein rohrförmigen Stützelement bzw. einem streng hohlzylindrischen Stützkörper 21 mit gleichem Außendurchmesser und mit gewissermaßen glatter bzw. nicht konturierter Mantelfläche. Anstelle der bevorzugt wellenförmigen Umfangskontur des Stützkörpers 21 ist es auch möglich, eine im Querschnitt dreieck- oder trapezförmige Umfangskontur am Stützkörper 21 vorzusehen.

Die entsprechend vergrößerte Mantel- bzw. Stützfläche des Stützkörpers 21 dient zur Abstützung des in Bezug auf dessen Durchmesser bzw. Mantelfläche relativ großen Filterstrumpfes 17, wobei sich der Filterstrumpf 17 zumindest annähernd an die Außenflächen der Vertiefungen 34 und Erhebungen 35 angleichen bzw. anlegen kann, wie dies in Fig. 8 teilweise idealisiert veranschaulicht wurde. Der Stützkörper 21 weist also eine Mantel- bzw. Stützfläche auf, welche im Vergleich zu einem herkömmlichen Stützkorb mit gleichem Außendurchmesser 23 einen deutlich großflächigeren Filterstrumpf 17 haltern bzw. positionieren kann.

Insbesondere kann der angegebene Stützkörper 21 aufgrund seiner vorzugsweise gewellten Oberflächenstruktur einen Filterstrumpf 17 mit vergleichsweise größerer, effektiver Filterfläche aufnehmen und somit ein Filterelement 8 mit besserer Filterperformance bilden. Wesentlich ist dabei, dass eine bestehende Filtervorrichtung 1, welche Durchbrüche 10 mit fix vorgegebenem bzw. begrenztem Durchmesser 11 - Fig. 1 - aufweist, problemlos mit erfindungsgemäßen Filterelementen 8 versehen werden kann, wodurch eine Filtervorrichtung 1 mit verbesserter Filterperformance erzielbar ist. Insbesondere ist ein Einbau der beschriebenen Filterelemente 8 mit vergleichsweise größerer, effektiver Filteroberfläche ermöglicht, ohne dadurch einen Umbau der Filtervorrichtung 1 - vor allem im Hinblick auf die Trennplatte 5 bzw. die Tragelemente für die Filterelemente 8 - vornehmen zu müssen. Jedenfalls kann die effektive Filterfläche beim angegebenen Filterelement 8 im Vergleich zu einem herkömmlichen Filterelement mit einem herkömmlichen gitterartigen Stützelement deutlich vergrößert werden und damit die Filterperformance der Filtervorrichtung 1 insgesamt gesteigert werden.

Zweckmäßig ist es dabei, wenn Senkenabschnitte der nutartigen Vertiefungen 34 und/oder Scheitelabschnitte der wulst- oder leistenartigen Erhebungen 35 abgerundet ausgebildet sind, wie dies vor allem den Querschnittsdarstellungen gemäß den Fig. 6, 8 zu entnehmen ist. Dadurch wird der Filterstrumpf 17 geschont bzw. wird der während des aktiven Filterbetriebes auftretende Verschleiß des Filterstrumpfes 17 minimiert.

Die Flexibilität bzw. Formvariabilität des Filterstrumpfes 17 und die Geometrie des Stützkörpers 21 bzw. dessen Oberflächenkonturen, insbesondere dessen Vertiefungen 34 und Erhebungen 35, sind bevorzugt derart abgestimmt, dass die Senkenabschnitte der Vertiefungen 34 und die Scheitelabschnitte der Erhebungen 35 jeweils zumindest abschnittsweise Abstützflächen für den Filterstrumpf 17 bilden. Der Verschleiß des Filterstrumpfes 17 wird dadurch minimiert bzw. können Filterstrümpfe 17 eingesetzt werden, welche eine vergleichsweise geringe Reißfestigkeit aufweisen und eine für den jeweiligen Einsatzfall optimale Filtercharakteristik bieten. Wie aus Fig. 7 ersichtlich ist, ist es zweckmäßig, wenn sich die im Querschnitt trapez- oder auch dreieckförmigen, insbesondere aber wellenförmigen Vertiefungen 34 und Erhebungen 35 über den Großteil der axialen Länge des Stützkörpers 21, insbesondere über 80 % bis 100 % der axialen Länge des Stützkörpers 21 erstrecken. Dadurch wird sichergestellt, dass der in einer Filtervorrichtung 1 - Fig. 1 - zur Verfügung stehende Platz bzw. Raum die Verwendung eines relativ großflächigen bzw. großvolumigen Filterstrumpfes 17 ermöglicht.

Entsprechend der Darstellung in Fig. 5 kann der Stützkörper 21 in jenem Endabschnitt, welcher dem offenen Ende 19 des Filterstrumpfes 17 nächstliegend ist, einen sich verbreiternden, insbesondere einen sich konisch erweiternden Kragenabschnitt 21 a aufweisen. Via diesen Kragenabschnitt 21 a kann sich der Stützkorb 21 rings um den vergleichsweise kleineren Durchbruch 10 in der Trennplatte 5 - Fig. 1 - lastübertragend abstützen, sodass ein Abfallen in die Schmutzluftkammer 6 ausgeschlossen ist. Ein Innendurchmesser 24 des Filterstrumpfes 17 ist dabei derart bemessen, dass auch der Kragenabschnitt 21 a vom sackartigen Filterstrumpf 17 umgeben bzw. umhüllt werden kann. Der Innendurchmesser 24 bzw. der Innenumfang des Filterstrumpfes 17 ist wiederum deutlich größer, insbesondere zumindest 10% größer oder auch ein mehrfaches größer bemessen, als der Außendurchmesser 23 bzw. der Außenumfang der eigentlichen Mantel- bzw. Stützfläche des Stützkörpers 21, sodass sich bei der Einwirkung von Strömungskräften zumindest im Mantelabschnitt des Filterstrumpfes 17 eine Falten- oder Wellenbildung einstellen kann, ohne dass der Filterstrumpf 17 elastisch gedehnt wird.

Wie am besten aus Fig. 8 ersichtlich ist, kann sich der im Ursprungszustand relativ großflächige bzw. weit dimensionierte Filterstrumpf 17, welcher im Ursprungszustand in etwa die in strichlierten Linien dargestellte Querschnittsdimension aufweisen kann, unter der Einwirkung der Luftströmung möglichst gleichmäßig bzw. relativ knitter- oder faltenfrei, an die äußere Mantelfläche des Stützkörpers 21 anlegen. Die relativ große Mantel- bzw. Filterfläche des Filterstrumpfes 17 wird dabei durch den Druck der Luftströmung gegen den Stützkörper 21 gedrängt und kann sich somit möglichst gleichförmig an die strukturierte Mantelfläche des Stützkörpers 21 angleichen bzw. anformen. In diesem Zustand bietet ein erfindungsgemäßes Filterelement 18 mit konturierter Oberfläche im Vergleich zu konventionellen Schlauchfiltern mit zylindrischer bzw. annähernd zylindrischer Mantelfläche eine deutlich bessere Filterperformance.

Wie bereits erwähnt, ist es durch den Einsatz des angegebenen Filterelementes 8 ermöglicht, bei ansonsten gleich bleibenden Durchbrüchen 10 bzw. Durchmessern 11 in der Trennplatte 5 - Fig. 1 - die neuartigen Filterelemente 8 mit erhöhter Filterleistung bzw. erhöhter Standzeit einzubauen. Dadurch werden zum einen Wartungsvereinfachungen bzw. Standzeiterhöhungen erzielt bzw. ist andererseits ein längerfristig unterbrechungsfreier Betrieb einer dementsprechend ausgebildeten Filtervorrichtung 1 erzielbar.

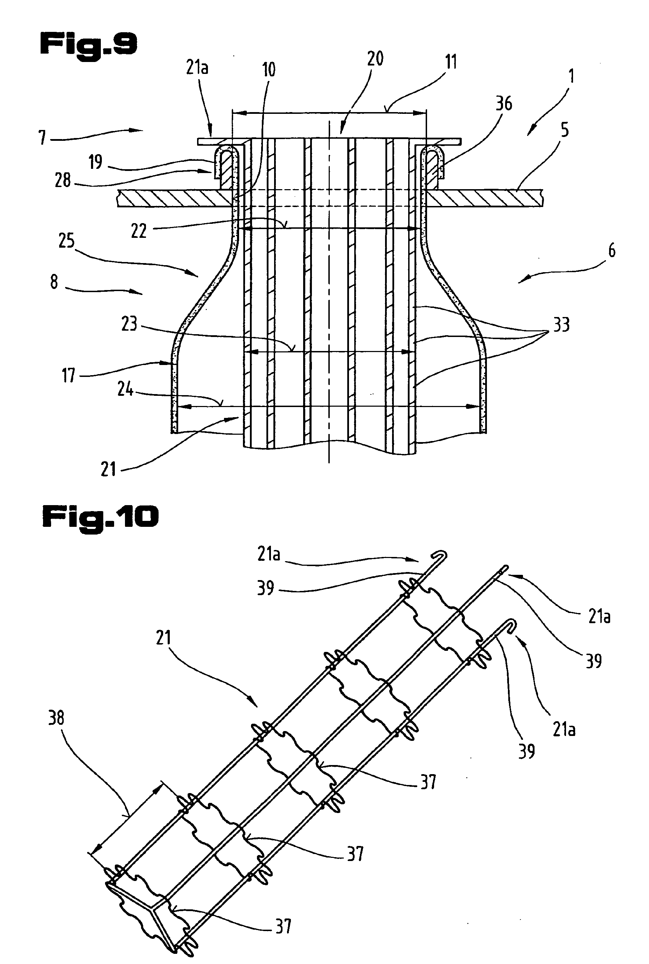

In Fig. 9 ist ein Ausschnitt einer Filtervorrichtung 1 im Bereich um dessen Filterelement 8 bzw. Trennplatte 5 in schematischer Schnittdarstellung veranschaulicht. Für vorhergehend bereits beschriebene Teile werden gleiche Bezugszeichen verwendet und sind die vorhergehenden Beschreibungsteile sinngemäß auf gleiche Teile mit gleichen Bezugszeichen übertragbar.

Dabei ist der Filterstrumpf 17 über ein Bundelement 28, welches rings um die Luftaustrittsöffnung 20 verläuft, relativ zur Trennplatte 5 befestigt. Das Bundelement 28 kann dabei elastisch dehnbar ausgeführt, insbesondere mit einem Gummizug versehen sein und/oder ein riemen- oder seilartiges Zugelement umfassen. Via das Bundelement 28 ist der Filterstrumpf 17 an einem von der Oberseite der Trennplatte 5 vorstehenden Haltekragen 36, welcher rings um den Durchbruch 10 verläuft, befestigbar. Der Haltekragen 36 rings um den Durchbruch 10 ist bevorzugt ringförmig ausgeführt. Bevorzugt wird das obere, offene Ende 19 des Filterstrumpfes 17 um den Haltekragen 36 gestülpt, wie dies in Fig. 9 schematisch dargestellt wurde. Dadurch wird ein Abrutschen des Filterstrumpfes 17 in die Schmutzluftkammer 6 vermieden. Der flansch- bzw. bundartige Kragenabschnitt 21 a des luftdurchlässigen bzw. mit zahlreichen Durchbrüchen 33 versehenen Stützkörpers 21 stützt sich auf dem oberen Endabschnitt des Filterstrumpfes 17 ab und klemmt den Filterstrumpf 17 dadurch fest. Insbesondere verhindert der Stützkörper 21 mit seinem bevorzugt ununterbrochen oder partiell verlaufenden, oberen Kragenabschnitt 21 a ein unerwünschtes Abrutschen des Filterstrumpfes 17 in die Schmutzluftkammer 6. Der Stützkörper 21 wird dabei über nicht dargestellte Schraub- oder Klemmverbindungen in mechanisch klemmender Vorspannung gegenüber dem oberen Ende 19 des Filterstrumpfes 17 positioniert gehalten.

Wesentlich ist, dass sich der sackartige Filterstrumpf 17 ausgehend von seinem offenen, axialen Ende 19 in Richtung zu seinem geschlossenen, axialen Ende innerhalb eines initialen Übergangsabschnittes 25 bezüglich seiner Querschnittsabmessungen erweitert. Dieser Übergangsabschnitt 25 kann dabei durch ein baulich separat gefertigtes Zwischen- bzw. Endstück des Filterstrumpfes 17 gebildet sein, welches mit dem hohlzylindrischen bzw. schlauchartigen Abschnitt des Filterstrumpfes 17 verbunden, insbesondere vernäht oder verschweißt ist. Alternativ ist es auch möglich, den Filterstrumpf 17 einstückig, insbesondere durch ein Webe- bzw. Strickverfahren herzustellen, und dabei einen hohlen, kegelstumpfförmigen Übergangsabschnitt 25 zu schaffen. Entsprechend einer vorteilhaften Ausführungsform weist der Filterstrumpf 17 im maximal expandierten Zustand eine annähernd flaschenförmige Seitenansicht bzw. Umrisskontur auf.

Wesentlich ist, dass der Filterstrumpf 17 innerhalb des größten Teilabschnittes seiner axialen Erstreckung einen Innendurchmesser 24 bzw. Innenumfang aufweist, der deutlich größer, insbesondere zumindest 10 % größer ist, als der größte Außendurchmesser 23 bzw. Außenumfang des innen liegenden Stützkörpers 21. Dadurch wird beim Aufbau von Unterdruck im Innenraum des Filterelementes 8 eine Annäherung bzw. Ansaugung des Filterstrumpfes 17 an den Stützkörper 21 erzielt, wobei durch das Zusammenwirken zwischen dem Stützkörper 21 und dem relativ großvolumigen Filterstrumpf 17 in der Oberfläche bzw. im Filtermedium des Filterstrumpfes 17 eine gezielte Wellen- bzw. Faltenbildung bewirkt wird, wie dies in Fig. 1 oder 8 schematisch angedeutet wurde.

Ein Durchmesser 22 bzw. Außenumfang des Filterstrumpfes 17 im Nahbereich um die Luftaustrittsöffnung 20, das heißt im Bereich der Montagezone, entspricht im Wesentlichen dem Durchmesser 11 bzw. dem Umfang des Durchbruches 10. Insbesondere ist der Durchmesser 22 des Filterstrumpfes 17 im Bereich der Luftaustrittsöffnung 20 in etwa gleich oder geringfügig größer als der Außendurchmesser 23 des Stützkörpers 21, wie dies in Fig. 9 schematisiert dargestellt wurde.

In Fig. 10 ist eine weitere Ausführungsvariante eines Stützkörpers 21 veranschaulicht, welcher eine Teilkomponente eines Filterelementes 8 bildet, wie es in der Filtervorrichtung 1 gemäß Fig. 1 zur Anwendung kommen kann.

Dabei ist der Stützkörper 21 durch mehrere, im Wesentlichen parallel zueinander ausgerichtete und in Draufsicht annähernd stern- oder zahnradförmige Ringelemente 37 gebildet. Insbesondere sind bevorzugt ringförmig geschlossene Elemente mit wellen- bzw. sinusförmiger Umrisskontur ausgebildet. Diese Ringelemente 37 sind dabei schicht- bzw. stapelartig aneinandergereiht, wobei die einzelnen Ringelemente 37 in vorbestimmter Distanz 38 zueinander gehaltert sind. Bevorzugt sind die einzelnen stern- oder zahnradförmigen Ringelemente 37 durch wenigstens ein in axialer Richtung des Stützkörpers 21 verlaufendes Stabelement 39 zueinander distanziert gehaltert. Üblicherweise sind zumindest zwei, bevorzugt drei Stabelemente 39 ausgebildet, über welche die einzelnen Ringelemente 37 aufgefädelt bzw. in entsprechender Distanz 38 gehalten sind.

Bevorzugt ist dieser Stützkörper 21 als Schweißkonstruktion ausgeführt, wobei die Stabelemente 39 innerhalb oder außerhalb der Ringelemente 37 positioniert sein können und an den jeweiligen Überkreuzungspunkten zwischen Ringelement 37 und Stabelement 39 mechanische Verbindungen, insbesondere Schweißverbindungen ausgeführt sind. An einem axialen Ende des Stützkörpers 21 können die Stabelemente 39 hakenförmig umgeformt sein und derart den Kragenabschnitt 21 a zur lastübertragenden Abstützung auf der Trennplatte 5 einer Filtervorrichtung 1 - Fig. 1, 9 - bilden. Ein derartiger Stützkörper 21 kann besonders leichtgewichtig aufgebaut werden und begünstigt ein solcher Stützkörper 21 eine möglichst gleichförmige bzw. gut reproduzierbare Wellen- bzw. Faltenbildung in Kombination mit einem relativ großvolumigen, den Stützkörper 21 mit seitlichem Spielraum umhüllenden Filterstrumpf 17, wie dies in Fig. 9 angedeutet wurde.

Die Ausführungsbeispiele zeigen mögliche Ausführungsvarianten der Filtervorrichtung 1 bzw. des Filtereiementes 8, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Es sind also auch sämtliche denkbaren Ausführungsvarianten, die durch Kombinationen einzelner Details der dargestellten und beschriebenen Ausführungsvariante möglich sind, vom Schutzumfang mit umfasst.

Der Ordnung halber sei abschließend darauf hingewiesen, dass zum besseren Verständnis des Aufbaus der Filtervorrichtung 1 bzw. des Filterelementes 8 diese bzw. deren Bestandteile teilweise unmaßstäblich und/oder vergrößert und/oder verkleinert dargestellt wurden.

Die den eigenständigen erfinderischen Lösungen zugrunde liegende Aufgabe kann der Beschreibung entnommen werden.

Vor allem können die einzelnen in den Fig. 1; 2-4; 5-7; 8; 9; 10 gezeigten Ausführungen den Gegenstand von eigenständigen, erfindungsgemäßen Lösungen bilden. Die diesbezüglichen, erfindungsgemäßen Aufgaben und Lösungen sind den Detailbeschreibungen dieser Figuren zu entnehmen.

**Bezugszeichenaufstellung**
- 1: Filtervorrichtung
- 2: Gehäuse
- 3: Lufteintrittsöffnung
- 4: Luftaustrittsöffnung
- 5: Trennplatte

- 6: Schmutzluftkammer
- 7: Reinluftkammer
- 8: Filterelement
- 9: Hohlkörper
- 10: Durchbruch

- 11: Durchmesser
- 12: Auffangwanne
- 13: Austragungsvorrichtung
- 14: Austrittsöffnung
- 15: Abreinigungsvorrichtung

- 16: Druckluftreinigungsvorrichtung
- 17: Filterstrumpf
- 18: erstes axiales Ende (geschlossen)
- 19: zweites axiales Ende (offen)
- 20: Luftaustrittsöffnung

- 21: Stützkörper
- 21a: Kragenabschnitt
- 22: Durchmesser
- 23: Außendurchmesser
- 24: Innendurchmesser
- 25: Übergangsabschnitt

- 26: Länge
- 27: Mantelabschnitt
- 28: Bundelement
- 29-29": Verbindungsstelle
- 30: Verbindungselement

- 31: Plattenelement
- 32: Hohlkörper
- 33: Durchbruch
- 34: Vertiefung
- 35: Erhebung

- 36: Haltekragen
- 37: Ringelement
- 38: Distanz
- 39: Stabelement

## Patentansprüche

1. Filterelement (8) zur Reinigung eines mit Partikeln beladenen Luftstroms, umfassend einen sackartigen Filterstrumpf (17) aus einem luftdurchlässigen und formflexiblen Material zur Abtrennung von Partikeln aus einem der Außenfläche des Filterstrumpfes (17) zugeführten Luftstrom, einen Stützkörper (21) im Inneren des sackartigen Filterstrumpfes (17) zur Stützung des Filterstrumpfes (17) derart, dass er eine hohle Form, insbesondere eine weitestgehend hohlzylindrische oder sonstige hohlkörperartige Form einnimmt, wobei der sackartige Filterstrumpf (17) an seinem ersten axialen Ende (18) geschlossen ausgebildet ist und an seinem zweiten axialen Ende (19) eine Luftaustrittsöffnung (20) für den Austritt des gereinigten Luftstroms aus dem Filterstrumpf (17) aufweist, wobei ein Innendurchmesser (24) oder Innenumfang des Filterstrumpfes (17) in Querschnittsbereichen zwischen der Luftaustrittsöffnung (20) und seinem geschlossenen, ersten Ende (18) deutlich größer, insbesondere zumindest 10 %, bevorzugt 20 % bis 40 %, größer ist, als der größte Außendurchmesser (23) oder Außenumfang des Stützkörpers (21), sodass der Filterstrumpf (17) im Verhältnis zum darin aufgenommenen Stützkörper (21) derart dimensioniert ist, dass er den Stützkörper (21) im inaktiven oder nicht umströmten Zustand des Filterelementes (8) vergleichsweise locker und mit seitlichem Spielraum umgibt und bei Einwirkung einer Luftströmung gegenüber der Außenfläche des Filterstrumpfes (17) zumindest im Mantelabschnitt (27) des Filterstrumpfes (17) eine Falten- oder Wellenbildung eintritt und eine vergleichsweise enger anliegende Umkleidung des Stützkörpers (21) durch den Filterstrumpf (17) vorliegt, **dadurch gekennzeichnet, dass** der Filterstrumpf (17) ausgehend von seinem zweiten axialen Ende (19) mit der Luftaustrittsöffnung (20) in Richtung zu seinem ersten, geschlossen ausgeführten Ende (18) einen hohlen, sich erweiternden Übergangsabschnitt (25) aufweist.

2. Filterelement nach Anspruch 1, **dadurch gekennzeichnet, dass** der hohle Übergangsabschnitt (25) nur einen Bruchteil einer axialen Länge (26) des Filterstrumpfes (17) einnimmt und kegelstumpfförmig ausgeführt ist, sodass in Seitenansicht des Filterstrumpfes (17) eine flaschenartige Umrissform vorliegt.

3. Filterelement nach Anspruch 1, **dadurch gekennzeichnet, dass** der Filterstrumpf (17) im Anschluss an den hohlen Übergangsabschnitt (25) bis zum geschlossenen Ende (18) oder nahe zum geschlossenen Ende (18) einen hohl-zylindrischen oder hohl-elliptischen Mantelabschnitt (27) mit konstantem oder weitestgehend konstant bleibendem Innendurchmesser (24) oder Innenumfang aufweist.

4. Filterelement nach Anspruch 1, **dadurch gekennzeichnet, dass** ein Durchmesser (22) der Luftaustrittsöffnung (20) im Filterstrumpf (17) in etwa gleich groß oder geringfügig größer ist, als der größte Außendurchmesser (23) oder Außenumfang des Stützkörpers (21).

5. Filterelement nach Anspruch 1, **dadurch gekennzeichnet, dass** der Filterstrumpf (17) rings um die Luftsaustrittsöffnung (20) und/oder in Abschnitten zwischen seinem offenen Ende (19) und seinem geschlossenem Ende (18) zumindest ein elastisch dehnbares Bundelement (28) aufweist, dessen elastische Kraftwirkung zur Einengung oder Einschnürung des Innendurchmessers (24) des Filterstrumpfes (17) in radialer Richtung zum Stützkörper (21) ausgebildet ist.

6. Filterelement nach Anspruch 5, **dadurch gekennzeichnet, dass** der Filterstrumpf (17) im Nahbereich um das elastisch dehnbare Bundelement (28) mit elastischer Vorspannung am Stützkörper (21) anliegt.

7. Filterelement nach Anspruch 1, **dadurch gekennzeichnet, dass** zwischen dem Filterstrumpf (17) und dem Stützkörper (21) zumindest zwei, bevorzugt drei über den Querschnittsumfang des Filterstrumpfes (17) und des Stützkörpers (21) verteilt angeordnete Verbindungsstellen (29-29") ausgebildet sind.

8. Filterelement nach Anspruch 7, **dadurch gekennzeichnet, dass** die Verbindungsstellen (29-29") zur Beibehaltung einer möglichst gleichmäßigen Verteilung des Filterstrumpfes (17) in Bezug auf die Umfangsrichtung des Stützkörpers (21) ausgebildet sind.

9. Filterelement nach Anspruch 7, **dadurch gekennzeichnet, dass** an den Verbindungsstellen (29-29") wenigstens ein Verbindungselement (30), insbesondere eine Klammer oder ein magnetisches Haltelement ausgebildet ist, sodass eine plangemäße oder eine möglichst gleichmäßige Verteilung des Filterstrumpfes (17) in Umfangrichtung des Stützkörpers (21) gesichert ist.

10. Filterelement nach Anspruch 1, **dadurch gekennzeichnet, dass** der Mantelabschnitt des Stützkörpers (21) durch ein zu einem Hohlkörper (32) mit zylindrischer, elliptischer oder eckiger Querschnittsform zusammengerolltes oder zusammengesetztes, luftdurchlässiges Plattenelement (31), insbesondere durch ein Lochblech-Element oder ein Streckmetall-Element, gebildet ist.

11. Filterelement nach Anspruch 10, **dadurch gekennzeichnet, dass** das luftdurchlässige Plattenelement (31) eine Vielzahl von gleichmäßig verteilt angeordneten Durchbrüchen (33) aufweist, welche jeweils einen Durchbruchs-Querschnitt zwischen 0,5 cm² bis 5 cm², bevorzugt in etwa 1 cm² aufweisen.

12. Filterelement nach Anspruch 10, **dadurch gekennzeichnet, dass** eine Summe der Querschnitte von Durchbrüchen (33) im luftdurchlässigen Plattenelement (31) größer ist, als eine Summe der zwischen den Durchbrüchen (33) verbleibenden Stützfläche für den Filterstrumpf (17).

13. Filterelement nach Anspruch 10, **dadurch gekennzeichnet, dass** das luftdurchlässige Plattenelement (31) im Querschnitt wellenförmig ausgebildet ist

14. Filterelement nach Anspruch 1, **dadurch gekennzeichnet, dass** der hohle Stützkörper (21) im Querschnitt stern- oder zahnradförmig ausgebildet ist.

15. Filterelement nach Anspruch 1, **dadurch gekennzeichnet, dass** der Stützkörper (21) in Bezug auf den Querschnitt durch seinen Mantelabschnitt mehrere, in Bezug auf dessen Querschnittsumfang abwechselnd aufeinander folgende Vertiefungen (34) und Erhebungen (35) aufweist.

16. Filterelement nach Anspruch 15, **dadurch gekennzeichnet, dass** Senkenabschnitte der Vertiefungen (34) und Scheitelabschnitte der Erhebungen (35) abgerundet ausgebildet sind.

17. Filterelement nach Anspruch 15, **dadurch gekennzeichnet, dass** Senkenabschnitte der Vertiefungen (34) und Scheitelabschnitte der Erhebungen (35) jeweils Abstutzflächen für den Filterstrumpf (17) bilden.

18. Filterelement nach Anspruch 15, **dadurch gekennzeichnet, dass** die Vertiefungen (34) und Erhebungen (35) im Querschnitt wellenförmig ausgebildet sind und sich über einen Großteil der axialen Länge des Stützkörpers (21), insbesondere über 80 % bis 100 % der axialen Länge des Stützkörpers (21) erstrecken.

19. Filterelement nach Anspruch 1, **dadurch gekennzeichnet, dass** der Stützkörper (21) durch mehrere, im wesentlich parallel zueinander ausgerichtete und in Draufsicht annähernd stern- oder zahnraförmige Ringelemente (37) gebildet ist, welche durch wenigstens ein in axialer Richtung des Stützkörpers (21) verlaufendes Stabelement (39) zueinander distanziert gehaltert sind.

20. Filtervorrichtung (1) zur Reinigung eines mit Partikeln beladenen Luftstroms, umfassend ein Gehäuse (2) mit einer Lufteintrittsöffnung (3) für verunreinigte Luft,
eine Luftaustrittsöffnung (4) für gefilterte Luft, eine Trennplatte (5), die das Gehäuse (2) in eine Schmutzluftkammer (6) und in eine Reinluflkammer (7) unterteilt, und wenigstens ein Filterelement (8), welches an der Trennwand (5) derart gehaltert ist, dass es in die Schmutzluftkammer (6) ragt und eine filternde Luftströmungsverbindung zwischen der Schmutzluftkammer (6) und der Reinluftkammer (7) aufbaut, **dadurch gekennzeichnet, dass** in der Trennwand (5) zumindest ein Durchbruch (10) ausgebildet ist, durch welchen jeweils ein Filterelement (8) mit einem sackartigen, formflexiblen und luftdurchlässigen Filterstrumpf (17) gemäß einem der vorhergehenden Ansprüche ausgehend von der Reinluftkammer (7) in Richtung zur Schmutzluftkammer (6) eingeschoben und festgelegt ist.

21. Filtervorrichtung nach Anspruch 20, **dadurch gekennzeichnet, dass** ein in seinem Volumen maximal expandierter oder in seinem Querschnitt maximal aufgeweiteter Filterstrumpf (17) einen Innendurchmesser (24) oder Außenumfang aufweist, der deutlich größer bemessen ist, als ein Durchmesser (11) oder Umfang des Durchbruches (10) in der Trennwand (5).

22. Filtervorrichtung nach Anspruch 20, **dadurch gekennzeichnet, dass** eine maximale Querschnittserstreckung eines formstabilen Stützkörpers (21) für den sackartigen, formflexiblen Filterstrumpf (17) derart dimensioniert ist, dass der Stützkörper (21) ohne Verformungen ausgehend von der Reinluftkammer (7) über den Durchbruch (10) in die Schmutzluftkammer (6) überführbar ist.

## Claims

1. Filter element (8) for cleaning an air stream charged with particles, comprising a bag-like filter sock (17) made of an air-permeable and flexible material for separating particles from an air stream supplied to the outer surface of the filter sock (17), a support body (21) on the inside of the bag-like filter sock (17) for supporting the filter sock (17) such that it has a hollow shape, in particular a largely hollow cylindrical or other hollow body shape, and the bag-like filter sock (17) is designed to be closed at its first axial end (18) and on its second axial end (19) has an air outlet opening (20) for the outlet of the cleaned air stream from the filter sock (17), and an inner diameter (24) or inner circumference of the filter sock (17) is much greater in cross sectional areas between the air outlet opening (20) and its closed, first end (18), in particular at least 10 %, preferably 20 % to 40 % greater than the greatest outer diameter (23) or outer circumference of the support body (21), such that the filter sock (17) is dimensioned in relation to the support body (21) contained therein such that it surrounds the support body (21) in the inactive state of the filter element (8) without air flow comparatively loosely and with lateral play and folds or undulations are formed, at least in the casing section (27) of the filter sock (17), when air flows against the outer surface of the filter sock (17), and the filter sock (17) thus lies comparatively closer to the support body (21), wherein the filter sock (17) from its second axial end (19) with the air outlet opening (20) in the direction of its first, closed end (18) has a hollow, widening transitional section (25).

2. Filter element as claimed in claim 1, wherein the hollow transitional section (25) takes up only a fraction of an axial length (26) of the filter sock (17) and is designed in the form of truncated cone, so that in side view of the filter sock (17) it has a bottle-like outline shape.

3. Filter element as claimed in claim 1, wherein the filter sock (17) adjoining the hollow transitional section (25) up to the closed end (18) or close to the closed end (18) has a hollow-cylindrical or hollow-elliptical casing section (27) with a constant or largely constant inner diameter (24) or inner circumference.

4. Filter element as claimed in claim 1, wherein a diameter (22) of the air outlet opening (20) in the filter sock (17) is the same size or slightly larger than the greatest outer diameter (23) or outer circumference of the support body (21).

5. Filter element as claimed in claim 1, wherein the filter sock (17) around the air outlet opening (20) and/or in sections between its open end (19) and its closed end (18) comprises at least one elastically extendable flange element (28), whose elastic force is intended to narrow or restrict the internal diameter (24) of the filter sock (17) in radial direction to the support body (21).

6. Filter element as claimed in claim 5, wherein the filter sock (17) in the area around the elastically expandable flange element (28) bears with elastic pretensioning against the support body (21).

7. Filter element as claimed in claim 1, wherein between the filter sock (17) and the support body (21) at least two, preferably three connecting points (29-29") are provided distributed over the cross sectional circumference of the filter sock (17) and the support body (21).

8. Filter element as claimed in claim 7, wherein the connecting points (29-29") are provided for maintaining as far as possible an even distribution of the filter sock (17) in relation to the circumferential direction of the support body (21).

9. Filter element as claimed in claim 7, wherein at the connecting points (29-29") at least one connecting element (30), in particular a clamp or a magnetic holding element, is provided, so that a planned and as far as possible even distribution of the filter sock (17) is ensured in the circumferential direction of the support body (21).

10. Filter element as claimed in claim 1, wherein the casing section of the support body (21) is formed by an air permeable plate element (31) which is rolled up or put together to form a hollow body (32) with a cylindrical, elliptical or angular cross sectional form, in particular a perforated sheet metal element or an expanded metal element.

11. Filter element as claimed in claim 10, wherein the air-permeable plate element (31) comprises a plurality of evenly distributed openings (33), which respectively have an opening cross section of between 0.5 cm² to 5 cm², preferably about 1 cm².

12. Filter element as claimed in claim 10, wherein the sum of the cross sections of openings (33) in the air-permeable plate element (31) is greater than the sum of the support surfaces for the filter sock (17) remaining between the openings (33).

13. Filter element as claimed in claim 10, wherein the air-permeable plate element (31) is designed to be wave-like in cross section.

14. Filter element as claimed in claim 1, wherein the hollow support body (21) is designed to be star or gear-shaped in cross section.

15. Filter element as claimed in claim 1, wherein the support body (21) in relation to the cross section through its casing section comprises several depressions (34) and elevations (35) which follow one another alternately in relation to its cross sectional circumference.

16. Filter element as claimed in claim 15, wherein countersunk sections of the depressions (34) and crest sections of the elevations (35) are designed to be rounded.

17. Filter element as claimed in claim 15, wherein countersunk sections of the depressions (34) and crest sections of the elevations (35) respectively form support surfaces of the filter sock (17).

18. Filter element as claimed in claim 15, wherein the depressions (34) and elevations (35) are designed to be wave-like in cross section and extend over a large proportion of the axial length of the support body (21), in particular over 80 % to 100 % of the axial length of the support body (21).

19. Filter element as claimed in claim 1, wherein the support body (21) is formed by several essentially parallel ring elements (37) that are approximately star or gear-shaped in plan view and which are held spaced apart from one another by at least one rod element (39) running in the axial direction of the support body (21).

20. Filter device (1) for cleaning an air stream charged with particles, comprising a housing (2) with an air inlet opening (3) for unclean air, an air outlet opening (4) for filtered air, a separating plate (5), which divides the housing (2) into a dirty air chamber (6) and a clean air chamber (7), and at least one filter element (8), which is mounted on the separating wall (5), such that it projects into the dirty air chamber (6) and creates a filtering air flow connection between the dirty air chamber (6) and the clean air chamber (7), wherein in the separating wall (5) at least one opening (10) is formed, through which a filter element (8) with a bag-like, flexible and air permeable filter sock (17) according to one of the preceding claims can be inserted from the clean air chamber (7) in the direction of the dirty air chamber (6) and secured.

21. Filter device as claimed in claim 20, wherein a filter sock (17) that has been expanded to its maximum volume or expanded to its maximum cross section has an internal diameter (24) or external circumference, which is much greater than a diameter (11) or circumference of the opening (10) in the separating wall (5).

22. Filter device as claimed in claim 20, wherein a maximum cross sectional extension of a stable support body (21) is dimensioned for the bag-like, flexible filter sock (17), such that the support body (21) can be moved without deformation from the clean air chamber (7) via the opening (10) into the dirty air chamber (6).

## Revendications

1. Élément de filtration (8) pour la purification d'un courant d'air chargé avec des particules, comprenant une gaine de filtration de type sac (17) en un matériau perméable à l'air et de forme flexible, pour la séparation de particules à partir d'un courant d'air introduit sur la surface extérieure de la gaine de filtration (17), un corps support (21) à l'intérieur de la gaine de filtration de type sac (17) pour le support de la gaine de filtration (17) tel qu'elle prenne une forme creuse, notamment une forme essentiellement cylindrique creuse ou d'un autre corps creux, la gaine de filtration de type sac (17) étant fermée à sa première extrémité axiale (18) et comprenant à sa seconde extrémité axiale (19) une ouverture de sortie d'air (20) pour la sortie du courant d'air purifié de la gaine de filtration (17), un diamètre interne (24) ou un périmètre interne de la gaine de filtration (17) dans des zones de section entre l'ouverture de sortie d'air (20) et sa première extrémité fermée (18) étant significativement plus grand, notamment au moins 10 %, de préférence de 20 % à 40 %, plus grand que le plus grand diamètre extérieur (23) ou périmètre extérieur du corps support (21), de manière à ce que la gaine de filtration (17) soit dimensionnée par rapport au corps support (21) qu'elle contient de manière à ce qu'elle entoure le corps support (21) à l'état inactif ou non traversé de l'élément de filtration (8) de manière comparativement lâche et avec un jeu latéral, et à ce que, lors de l'action d'un courant d'air contre la surface extérieure de la gaine de filtration (17), des plis ou des vagues se forment au moins dans la partie d'enveloppe (27) de la gaine de filtration (17) et un gainage comparativement plus étroit du corps support (21) par la gaine de filtration (17) soit présent, **caractérisé en ce que** la gaine de filtration (17) présente une partie de transition creuse s'élargissant (25) depuis sa seconde extrémité axiale (19) munie de l'ouverture de sortie d'air (20) dans la direction de sa première extrémité fermée (18).

2. Élément de filtration selon la revendication 1, **caractérisé en ce que** la partie de transition creuse (25) n'occupe qu'une fraction d'une longueur axiale (26) de la gaine de filtration (17) et est de forme tronconique, de manière à ce qu'une forme de contour de type bouteille soit présente sur la vue latérale de la gaine de filtration (17).

3. Élément de filtration selon la revendication 1, **caractérisé en ce que** la gaine de filtration (17) comprend après la partie de transition creuse (25) jusqu'à l'extrémité fermée (18) ou à proximité de l'extrémité fermée (18) une partie d'enveloppe cylindrique creuse ou elliptique creuse (27) de diamètre interne ou de périmètre interne constant ou essentiellement constant (24).

4. Élément de filtration selon la revendication 1, **caractérisé en ce qu'**un diamètre (22) de l'ouverture de sortie d'air (20) dans la gaine de filtration (17) est approximativement aussi grand ou légèrement plus grand que le plus grand diamètre externe (23) ou périmètre externe du corps support (21).

5. Élément de filtration selon la revendication 1, **caractérisé en ce que** la gaine de filtration (17) comprend au moins un élément ceinture (28) dilatable élastiquement autour de l'ouverture de sortie d'air (20) et/ou dans des sections entre son extrémité ouverte (19) et son extrémité fermée (18), dont la force élastique est conçue pour la restriction ou la contraction du diamètre interne (24) de la gaine de filtration (17) dans la direction radiale vers le corps support (21).

6. Élément de filtration selon la revendication 5, **caractérisé en ce que** la gaine de filtration (17) est ajustée sur le corps support (21) avec une prétension élastique à proximité de l'élément ceinture dilatable élastiquement (28).

7. Élément de filtration selon la revendication 1, **caractérisé en ce qu'**au moins deux, de préférence trois, emplacements de connexion (29-29") répartis sur le périmètre de section de la gaine de filtration (17) et du corps support (21) sont formés entre la gaine de filtration (17) et le corps support (21).

8. Élément de filtration selon la revendication 7, **caractérisé en ce que** les emplacements de connexion (29-29") sont conçus pour le maintien d'une distribution aussi uniforme que possible de la gaine de filtration (17) par rapport à la direction périphérique du corps support (21).

9. Élément de filtration selon la revendication 7, **caractérisé en ce qu'**au moins un élément de connexion (30), notamment une pince ou un élément support magnétique, est formé aux emplacements de connexion (29-29') de manière à assurer une distribution prévue ou aussi uniforme que possible de la gaine de filtration (17) dans la direction périphérique du corps support (21).

10. Élément de filtration selon la revendication 1, **caractérisé en ce que** la partie d'enveloppe du corps support (21) est formée par un élément plaque (31) perméable à l'air, enroulé ou assemblé en un corps creux (32) de forme de section cylindrique, elliptique ou anguleuse, notamment par un élément plaque perforé ou un élément métal déployé.

11. Élément de filtration selon la revendication 10, **caractérisé en ce que** l'élément plaque perméable à l'air (31) comprend une pluralité d'ouvertures réparties uniformément (33), qui présentent chacune une section d'ouverture comprise entre 0,5 cm² et 5 cm², de préférence d'environ 1 cm².

12. Élément de filtration selon la revendication 10, **caractérisé en ce qu'**une somme des sections des ouvertures (33) dans l'élément de plaque perméable à l'air (31) est supérieure à une somme de la surface de support pour la gaine de filtration (17) restant entre les ouvertures (33).

13. Élément de filtration selon la revendication 10, **caractérisé en ce que** l'élément plaque perméable à l'air (31) est configuré sous forme ondulée dans la section.

14. Élément de filtration selon la revendication 1, **caractérisé en ce que** le corps support creux (21) est configuré sous forme en étoile ou en roue dentée dans la section.

15. Élément de filtration selon la revendication 1, **caractérisé en ce que** le corps support (21) comprend plusieurs creux (34) et soulèvements (35) successifs alternés sur son périmètre de section dans sa partie d'enveloppe par rapport à la section.

16. Élément de filtration selon la revendication 15, **caractérisé en ce que** les parties de fond des creux (34) et les parties de crête des soulèvements (35) sont arrondies.

17. Élément de filtration selon la revendication 15, **caractérisé en ce que** les parties de fond des creux (34) et les parties de crête des soulèvements (35) forment à chaque fois des surfaces supports pour la gaine de filtration (17).

18. Élément de filtration selon la revendication 15, **caractérisé en ce que** les creux (34) et les soulèvements (35) sont configurés sous forme ondulée dans la section et s'étendent sur une grande partie de la longueur axiale du corps support (21), notamment sur 80 % à 100 % de la longueur axiale du corps support (21).

19. Élément de filtration selon la revendication 1, **caractérisé en ce que** le corps support (21) est formé par plusieurs éléments annulaires (37) essentiellement parallèles les uns aux autres et approximativement de forme en étoile ou en roue dentée en vue de dessus, qui sont maintenus espacés les uns des autres par au moins un élément barre (39) disposé dans la direction axiale du corps support (21).

20. Dispositif de filtration (1) pour la purification d'un courant d'air chargé avec des particules, comprenant un boîtier (2) muni d'une ouverture d'entrée d'air (3) pour l'air contaminé, d'une ouverture de sortie d'air (4) pour l'air filtré, d'une plaque de séparation (5), qui partage le boîtier (2) en une chambre à air sale (6) et une chambre à air pur (7), et d'au moins un élément de filtration (8), qui est maintenu sur la paroi de séparation (5) de manière à ce qu'il dépasse dans la chambre à air sale et forme un conduit de courant d'air filtrant entre la chambre à air sale (6) et la chambre à air pur (7), **caractérisé en ce qu'**au moins une ouverture (10) est formée dans la paroi de séparation (5), dans laquelle un élément de filtration (8) comprenant une gaine de filtration de type sac, de forme flexible et perméable à l'air (17) selon l'une quelconque des revendications précédentes est à chaque fois inséré et fixé depuis la chambre à air pur (7) en direction de la chambre à air sale (6).

21. Dispositif de filtration selon la revendication 20, **caractérisé en ce qu'**une gaine de filtration (17) expansée au maximum au niveau de son volume ou élargie au maximum au niveau de sa section présente un diamètre interne (24) ou un périmètre externe qui est significativement plus grand qu'un diamètre (11) ou un périmètre de l'ouverture (10) dans la paroi de séparation (5).

22. Dispositif de filtration selon la revendication 20, **caractérisé en ce qu'**un étirement de section maximal d'un corps support de forme stable (21) pour la gaine de filtration de type sac, de forme flexible (17) est dimensionné de manière à ce que le corps support (21) puisse être transféré sans déformation depuis la chambre à air pur (7) dans la chambre à air sale (6) en passant par l'ouverture (10).
